# FASCICULE DE BREVET EUROPEEN

(11) **EP 2 111 670 B1**
(45) Date de publication et mention de la délivrance du brevet: **03.08.2011**
(21) Numéro de dépôt: 08708597.3
(22) Date de dépôt: 01.02.2008
(51) Int. Cl.: H01M 10/44, H01M 10/48, H01M 10/50, H01M 2/30

(54) **MODULE DE BATTERIE DE PUISSANCE, BATTERIE, PROCÉDÉ DE CHARGE DU MODULE, VÉHICULE AYANT LA BATTERIE.**
STROMBATTERIEMODUL, BATTERIE, VERFAHREN ZUM LADEN DES MODULS UND FAHRZEUG MIT EINER SOLCHEN BATTERIE
POWER BATTERY MODULE, BATTERY, METHOD FOR CHARGING THE MODULE, AND VEHICLE WITH SUCH BATTERY

(30) Priorité: 06.02.2007 FR 0700825
(43) Date de publication de la demande: 28.10.2009
(73) Titulaire: Batscap, 29500 Ergué-Gabéric (FR)
(72) Inventeur: SELLIN, Christian, F-29900 Concarneau (FR); MONFORT, Jean-Luc, F-29000 Quimper (FR); NEDELEC, Luc, F-29460 L'hopital Camfrout (FR)
(74) Mandataire: Roussel, Eric Marcel Henri
(86) Numéro de dépôt international: PCT/EP2008/051291
(87) Numéro de publication internationale: WO 2008/101789

(56) Documents cités:
- DE-A1- 19 614 435

## Description

L'invention concerne un module de batterie ayant des cellules rechargeables ayant une température nominale de fonctionnement supérieure à 20°C.

Un domaine d'application de l'invention est les batteries de puissance, telles que par exemple celles servant de source d'énergie pour entraîner une chaîne de traction dans les véhicules électriques.

Bien entendu, le module de batterie peut avoir d'autres applications, par exemple pour alimenter des appareils fixes.

Ces applications à des batteries de puissance utilisent par exemple des cellules de technologie lithium - métal - polymère.

L'un des buts des batteries de puissance est d'avoir une densité d'énergie la plus grande possible. Ainsi, les cellules lithium - métal - polymère réalisées par assemblage de films permettent d'obtenir des densités d'énergie spécifique et volumique, supérieures respectivement à 100 W.h/kg et 100 W.h/l.

Un autre but de l'industrie des batteries de puissance est de produire des modules de batterie ayant une grande durée de vie, étant donné qu'une grande durée de vie est un facteur permettant de concurrencer à terme les moteurs à combustion dans les applications aux véhicules automobiles.

D'une manière générale, les cellules concernées par l'invention sont du genre à devoir être chauffées à leur température nominale de fonctionnement par un organe de chauffage.

Dans un module, les cellules sont branchées entre deux bornes extérieures de connexion. Une batterie est par exemple formée de plusieurs modules ayant leurs bornes de connexion reliées en série.

Les cellules peuvent se trouver dans trois états : charge, décharge ou régénération.

Les cellules peuvent être chargées en connectant celles-ci à un chargeur extérieur adapté.

L'état de décharge correspond à l'alimentation en courant électrique d'un appareil consommateur d'énergie depuis les cellules.

L'état de régénération correspond à la situation dans laquelle l'appareil consommateur d'énergie recharge les cellules, comme par exemple dans le cas d'un véhicule électrique en situation de freinage, dans laquelle un courant électrique de régénération est fourni depuis la chaîne de traction aux cellules de la batterie.

Afin de préserver la durée de vie des modules et de la batterie, il importe de respecter certaines conditions d'utilisation en charge.

En effet, du fait des grandes densités d'énergie, il circule un courant de charge très élevé entre l'entité formant chargeur et le module de batterie ou la batterie.

Une charge de la batterie ou du module de batterie à une température trop basse favorise de manière sensible la formation de dendrites dans les cellules, entraînant une diminution de leur durée de vie.

Le document WO 99 / 31 752 décrit un système de contrôle de batterie, servant à l'alimentation de secours d'un équipement, tel qu'un ordinateur ou un équipement de télécommunication, normalement alimenté depuis un redresseur de réseau de distribution d'électricité. Par ce système de contrôle, la batterie est chargée depuis le redresseur de réseau et est, en cas de défaillance du réseau d'alimentation, déchargée dans l'équipement. Le système comporte un mode de repos, dans lequel la tension du redresseur de réseau est détectée pour passer ensuite dans un mode froid. En mode froid, le système utilise le courant fourni par le redresseur de réseau pour chauffer les cellules de la batterie à une température de 60 °C. Une fois cette température de 60°C atteinte, le système passe en mode de charge, dans lequel un interrupteur placé entre les bornes de la batterie et les cellules est fermé pour charger la batterie à partir du redresseur de réseau.

On comprend donc que pendant la majorité du temps, c'est-à-dire en l'absence de défaillance, un tel système n'est pas en décharge, mais est toujours relié à une entité chargeuse. Ce système présente l'inconvénient de ne pas pouvoir se dispenser d'un réseau d'alimentation extérieur relié en permanence à la batterie comme entité chargeuse de la batterie. Ce système est utilisé occasionnellement en cycle de charge et de décharge, c'est-à-dire bien moins de 1 % du temps, et non de manière intensive en charge et en décharge.

Au contraire, dans une utilisation de la batterie comme alimentation unique et autonome d'un équipement tel qu'un véhicule automobile, les modules de batterie sont soumis à un plus grand nombre de contraintes dues à la plus grande proportion de cycles de charge et de décharge, supérieure à 20 % du temps.

Ce système selon le document WO 99 / 31 752 se prête donc mal à une utilisation de la batterie comme alimentation unique et autonome d'un équipement tel que par exemple un véhicule automobile. Ce système selon le document WO 99 / 31 752 n'est pas approprié pour une mise en série de plusieurs modules de batterie de par sa topologie.

Le document DE 196 14 435 décrit un module de batterie comprenant des bornes distinctes de charge et d'utilisation et comprenant également un élément de chauffage.

L'Invention vise à obtenir un module de batterie et une batterie, qui se prêtent à des applications où le module de batterie ou la batterie n'est pas connecté en permanence à une entité chargeuse mais doit au contraire avoir une grande autonomie de décharge sur un équipement consommateur, qui permettent de maîtriser le processus de chauffage et de charge des cellules, de préserver la durée de vie du module de batterie ou de la batterie, et de conserver une grande densité de puissance dans une utilisation intensive.

A cet effet, un premier objet de l'invention est un module de batterie de puissance, comportant une multiplicité de cellules rechargeables ayant une température nominale de fonctionnement en charge, supérieure à 20°C, deux bornes extérieures d'utilisation des cellules et au moins un organe de chauffage électrique des cellules,

caractérisé en ce qu'il comporte en outre un circuit de gestion de charge des cellules lequel comporte :
- deux bornes extérieures de charge des cellules, qui sont destinées à être connectées à un chargeur extérieur et dont au moins l'une, appelée deuxième borne de charge, est distincte des bornes d'utilisation,
- des premiers moyens d'interruption / connexion entre ladite au moins une deuxième borne de charge et au moins l'une des bornes d'utilisation, appelée première borne d'utilisation, les premiers moyens d'interruption / connexion étant aptes à se trouver dans l'une ou l'autre d'une première position d'interruption pour empêcher le passage de courant entre la deuxième borne de charge et la première borne d'utilisation, et d'une deuxième position de connexion de la deuxième borne de charge et de la première borne d'utilisation,
- des deuxièmes moyens de liaison entre les bornes de charge et l'organe de chauffage pour relier, au moins dans la première position d'interruption des premiers moyens d'interruption / connexion, les bornes de charge à l'organe de chauffage pour l'alimentation de l'organe de chauffage en électricité.

Par exemple, les deux bornes de charge sont des deuxièmes bornes de charge, distinctes des bornes d'utilisation, appelées premières bornes d'utilisation, les premiers moyens d'interruption / connexion étant prévus entre les deuxièmes bornes et les premières bornes.

Des modes de réalisation de l'invention sont prévus pour résoudre notamment les problèmes liés à la mise en série de plusieurs modules par leurs bornes d'utilisation. En effet, un objectif est d'obtenir un module de batterie, qui soit souple d'utilisation, et puisse notamment être utilisé d'une manière non autodestructrice dans le cas d'une telle mise en série, exigée pour l'alimentation unique et autonome d'un équipement tel que par exemple un véhicule automobile. Dans ce cas apparaissent des contraintes techniques fortes dues aux tensions élevées (plusieurs centaines de Volts), qui sont potentiellement destructrices des interrupteurs utilisés dans chaque module.

Suivant des modes de réalisation de l'invention :
- les deuxièmes moyens de liaison comprennent au moins un interrupteur de chauffe, ayant une entrée de contrôle d'ouverture et de fermeture, en série avec l'organe de chauffage, ce circuit série étant connecté entre les bornes de charge,
   l'entrée de contrôle étant reliée à des moyens d'activation d'ouverture comportant une entrée de commande pour mettre l'interrupteur de chauffe en position d'ouverture en présence d'un signal de commande d'ouverture sur ladite entrée de commande,
   des troisièmes moyens étant prévus dans le module pour que la fermeture de l'interrupteur de chauffe soit indépendante des moyens d'activation d'ouverture et de l'entrée de commande ; les deuxièmes moyens de liaison comprennent au moins un interrupteur de chauffe, ayant une entrée de contrôle d'ouverture et de fermeture, en série avec l'organe de chauffage, ce circuit série étant connecté entre les bornes de charge,
   l'entrée de contrôle étant reliée à des troisièmes moyens d'activation automatique de fermeture de l'interrupteur de chauffe en présence d'une tension entre les bornes de charge, et à des moyens d'activation d'ouverture comportant une entrée de commande pour mettre l'interrupteur de chauffe en position d'ouverture en présence d'un signal de commande d'ouverture sur ladite entrée de commande ;
- l'entrée de commande des moyens d'activation d'ouverture est opto - isolée par rapport à l'entrée de contrôle de l'interrupteur de chauffe ;
- ou les moyens d'activation d'ouverture comportent un interrupteur, dont la voie principale d'interruption / conduction de courant est reliée en parallèle du circuit série formé par l'interrupteur de chauffe et le moyen d'interruption et dont la borne de contrôle sert d'entrée de commande d'ouverture ;
- les deuxièmes moyens de liaison comprennent en série avec l'organe de chauffage au moins un interrupteur de chauffe, ayant une entrée de contrôle d'ouverture et de fermeture, ce circuit série étant connecté entre les bornes de charge,
   l'entrée de contrôle de l'interrupteur de chauffe étant reliée à un moyen de limitation de tension ;
   les troisièmes moyens comprennent des organes de polarisation de l'entrée de contrôle à partir des bornes de charge ;
- le moyen de limitation de tension comprend au moins une diode Zener ;
- l'interrupteur de chauffe comporte au moins un transistor, dont la voie principale d'interruption / conduction de courant est en série avec l'organe de chauffage et dont la borne de contrôle de la voie principale sert d'entrée de contrôle ;
- le transistor de l'interrupteur de chauffe est un transistor MOS, dont la section drain - source forme la voie principale d'interruption / conduction de courant et dont la grille sert d'entrée de contrôle ;
- la diode Zener est en parallèle avec la section grille - source du transistor MOS de l'interrupteur de chauffe ;
- les deuxièmes moyens de liaison comprennent, en série avec l'organe de chauffage entre les bornes de charge, au moins un fusible thermique de protection contre des températures excédant une température prescrite supérieure à la température nominale de fonctionnement en charge des cellules ;
- le module comporte au moins une unité de mesure de la température en au moins une zone du module, et des moyens de commande de la position des premiers moyens d'interruption / connexion,
   lesdits moyens de commande étant sensibles à la température mesurée par l'unité de mesure pour commander le passage dans la position de connexion des premiers moyens d'interruption / connexion, lorsque la température minimale fournie par l'unité de mesure est supérieure ou égale à la température nominale de fonctionnement en charge prescrite auxdits moyens de commande ;
- les deuxièmes moyens de liaison comprennent au moins un interrupteur de chauffe, ayant une entrée de contrôle d'ouverture et de fermeture, en série avec l'organe de chauffage, ce circuit série étant connecté entre les bornes de charge,
   le module comportant des moyens de commande reliés à l'entrée de contrôle pour ouvrir l'interrupteur de chauffe seulement en position de connexion des premiers moyens d'interruption / connexion ;
- l'organe de chauffage est respectivement associé à l'unité de mesure de température dans ladite zone du module, et
   les moyens de commande sont prévus pour, en position de connexion des premiers moyens d'interruption / connexion, provoquer l'ouverture de l'interrupteur de chauffe lorsque la température mesurée de l'unité associée devient supérieure à une première température prescrite, supérieure à la température nominale de fonctionnement en charge, et provoquer la fermeture de l'interrupteur de chauffe lorsque la température mesurée de l'unité associée devient inférieure à une deuxième température prescrite, inférieure à la température nominale de fonctionnement en charge et supérieure à 20°C ;
- il est prévu une unité de mesure de température en au moins deux zones différentes du module ;
- les cellules sont réalisées par des assemblages de films minces ;
- les cellules ont une température nominale de fonctionnement en charge, supérieure à 80 °C ;
- les cellules sont du type lithium - métal - polymère ;
- le module comporte un moyen de production d'une consigne quantitative de charge et un premier accès de communication vers l'extérieur, apte à transmettre la consigne quantitative de charge.

Un deuxième objet de l'invention est une batterie, caractérisée en ce qu'elle comporte dans un boîtier de batterie une pluralité de modules de batterie tels que décrits ci-dessus, les modules étant reliés par leurs bornes d'utilisation dans le boîtier, la batterie comportant au moins deux bornes d'utilisation, accessibles à l'extérieur du boîtier et reliées aux modules, et au moins deux bornes de charge, accessibles à l'extérieur du boîtier et reliées aux modules.

Suivant d'autres caractéristiques de l'invention :
- les bornes d'utilisation des modules sont reliées l'une à la suite de l'autre en série dans le boîtier, l'une des bornes extérieures d'utilisation est reliée à la borne d'utilisation de tension la plus basse de l'ensemble des modules et l'autre borne extérieure d'utilisation de la batterie est reliée à la borne d'utilisation de tension la plus haute de l'ensemble des modules ;
- les bornes de charge de chaque module sont accessibles à l'extérieur du boîtier ;
- les modules sont reliés par leurs bornes de charge dans le boîtier, la batterie comportant deux bornes de charge, accessibles à l'extérieur du boîtier et reliées aux modules ;
- les bornes de charge des modules sont reliées l'une à la suite de l'autre en série dans le boîtier, l'une des bornes extérieures de charge est reliée à la borne de charge de tension la plus basse de l'ensemble des modules et l'autre borne extérieure de charge de la batterie est reliée à la borne de charge de tension la plus haute de l'ensemble des modules ;
- la batterie comporte un moyen de production d'une consigne quantitative de charge des modules et un premier accès de communication vers l'extérieur, apte à transmettre la consigne quantitative de charge.

Un troisième objet de l'invention est un procédé de charge d'un module de batterie tel que décrit ci-dessus à partir d'un chargeur extérieur, caractérisé en ce que
la au moins une deuxième borne extérieure de charge est d'abord déconnectée par rapport à la au moins une première borne extérieure d'utilisation distincte de la au moins une deuxième borne extérieure de charge,
le chargeur est connecté aux bornes extérieures de charge pour y appliquer une tension,
l'organe de chauffage est connecté aux bornes extérieures de charge pour chauffer les cellules du module à partir de la tension du chargeur au moins à la température nominale de fonctionnement en charge au cours d'une phase initiale de chauffage, et
après la phase initiale de chauffage, on connecte la au moins une première borne extérieure d'utilisation à la au moins une deuxième borne extérieure de charge pour charger les cellules à partir de la tension du chargeur.

Suivant d'autres caractéristiques de l'invention :
- les deux bornes de charge sont des deuxièmes bornes de charge, distinctes des bornes d'utilisation, appelées premières bornes d'utilisation,
   avant et pendant la phase initiale de chauffage, les deux bornes de charge sont déconnectées par rapport aux bornes d'utilisation, jusqu'à ce que les cellules soient chauffées à leur température nominale de fonctionnement en charge,
   après la phase initiale de chauffage, les cellules sont chargées à partir de la tension du chargeur depuis les deuxièmes bornes de charge, par connexion des bornes de charge aux bornes d'utilisation des cellules ;
- au moins une unité de mesure prévue en au moins une zone du module mesure la température,
   un calculateur du module, relié à l'unité de mesure, surveille la température mesurée des cellules et commande la connexion de la au moins une première borne extérieure d'utilisation à la au moins une deuxième borne extérieure de charge lorsque la température minimale mesurée est supérieure ou égale à la température nominale de fonctionnement en charge ;
- au moins un interrupteur de chauffe, comportant une entrée de contrôle d'ouverture et de fermeture, est en série avec l'organe de chauffage, ce circuit série étant connecté entre les deux bornes extérieures de charge,
   l'interrupteur de chauffe est automatiquement fermé en présence de la tension du chargeur sur les bornes extérieures de charge pendant la phase initiale de chauffage,
   un calculateur du module ne commande l'entrée de contrôle pour provoquer au moins temporairement l'ouverture de l'interrupteur de chauffe que lorsque les bornes de charge sont connectées aux bornes d'utilisation des cellules ;
- l'organe de chauffage est respectivement associé à l'unité de mesure de température dans ladite zone du module, et
   lorsque les bornes de charge sont connectées aux bornes d'utilisation des cellules, le calculateur commande l'entrée de contrôle pour provoquer l'ouverture de l'interrupteur de chauffe lorsque la température mesurée de l'unité associée de vient supérieure à une première température prescrite, supérieure à la température nominale de fonctionnement en charge, et pour provoquer la fermeture de l'interrupteur de chauffe lorsque la température mesurée de l'unité associée devient inférieure à une deuxième température prescrite, inférieure à la température nominale de fonctionnement en charge et supérieure à 20°C ;
- il est prévu une unité de mesure de température en au moins deux zones différentes du module ;
- le module de batterie est logé dans un véhicule automobile.

Un quatrième objet de l'invention est un véhicule automobile, comportant une chaîne de traction et au moins une batterie tel que décrite ci-dessus, pour alimenter au moins temporairement la chaîne de traction par de l'énergie électrique.

L'invention sera mieux comprise à la lecture de la description qui va suivre, donnée uniquement à titre d'exemple non limitatif en référence aux dessins annexés, sur lesquels :
- la figure 1 représente schématiquement un module de batterie suivant l'invention,
- la figure 2 représente schématiquement un circuit de chauffe des cellules du module selon la figure 1,
- la figure 3 représente schématiquement un exemple de charge de deux modules selon la figure 1 en série depuis deux chargeurs,
- la figure 4 représente schématiquement un exemple de charge de deux modules selon la figure 1 en série depuis un seul chargeur,
- la figure 5 représente schématiquement un exemple de réalisation du circuit de chauffe d'un module selon la figure 1,
- la figure 6 représente schématiquement un exemple de réalisation d'une batterie ayant plusieurs modules 1 en série, chargés depuis un unique chargeur, avec indication des tensions des organes de chauffe,
- la figure 7 correspond à la figure 6, dans le cas de l'inactivation partielle des organes de chauffe d'un des modules,
- la figure 8 est un organigramme d'un procédé de charge d'un module suivant l'invention,
- la figure 9 représente schématiquement une variante de l'exemple de réalisation du circuit de chauffe d'un module selon la figure 5, et
- la figure 10 représente schématiquement un mode de réalisation d'un chargeur installé avec un pack de modules suivant l'invention sur un véhicule automobile.

L'invention est décrite ci-dessous en référence au mode de réalisation représenté aux figures, dans lequel les cellules sont réalisées par assemblage de films, par exemple en lithium - métal - polymère. L'épaisseur totale de ces films est par exemple inférieure à 300 micromètres et par exemple de 150 micromètres environ. Les cellules ont une température nominale de fonctionnement en charge supérieure à 20 °C, et, pour une technologie lithium - métal - polymère, une température nominale de fonctionnement de 90 °C en charge.

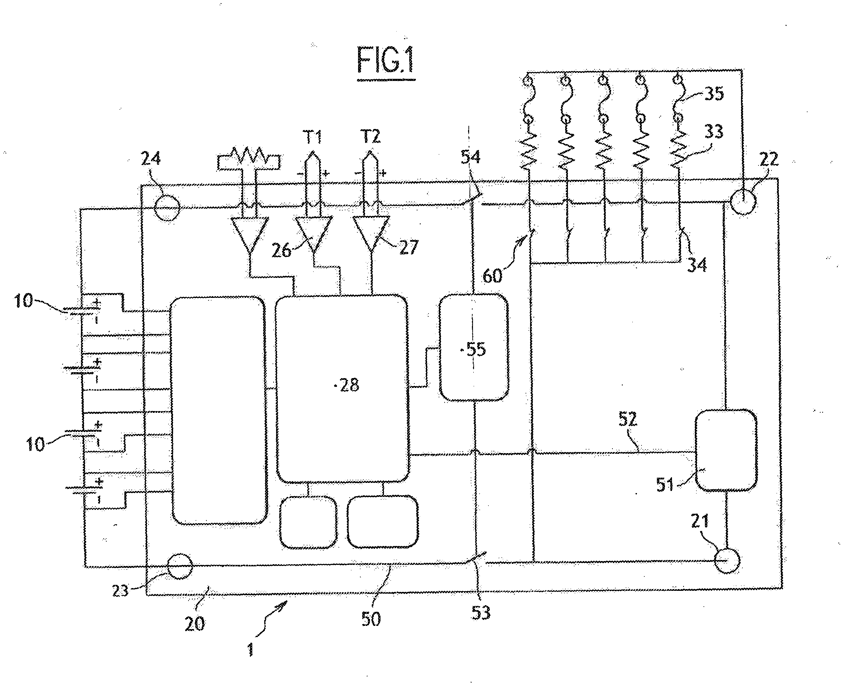

A la figure 1, un module 1 de batterie comporte, entre deux premières bornes 23, 24 extérieures de connexion et d'utilisation, un nombre m de cellules 10 identiques en série, rechargeables et déchargeables, ainsi qu'une unité 20 de contrôle de ses propres cellules 10. Cette unité 20 de contrôle est par exemple sous la forme d'une carte électronique à circuit imprimé.

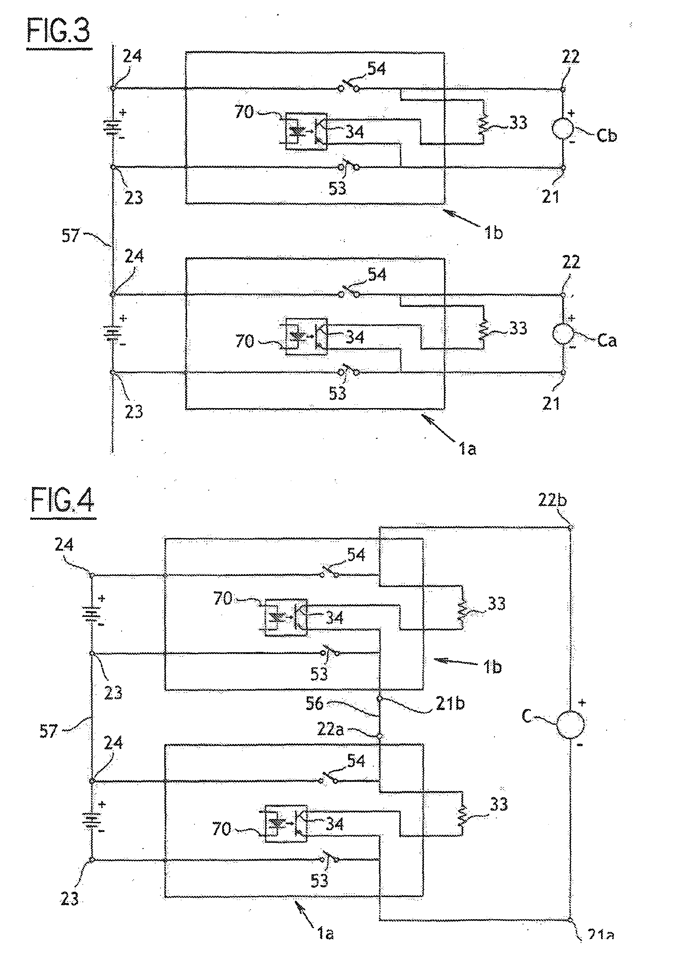

Une batterie peut être constituée de un ou plusieurs modules en série par leurs bornes 23, 24. Pour une mise en série de n modules, ainsi que cela est représenté aux figures 3, 4 et 5, la borne de tension haute 24 d'un module est reliée par un conducteur 57 de puissance, tel que par exemple une barre métallique de section transversale suffisamment grande, à la borne 23 de tension basse du module suivant, la batterie comportant deux bornes extérieures, dont l'une est reliée à la borne 23 de tension la plus basse de l'ensemble des modules, et dont l'autre est reliée à la borne 24 de tension la plus haute de l'ensemble des modules, ces deux bornes extérieures étant destinées à être reliées à deux bornes d'un appareil consommateur pour l'alimenter en courant électrique. Par exemple, 1 < n < 15. Bien entendu, dans d'autres modes de réalisation non représentés, certains des modules pourraient être mis en parallèle.

L'unité 20 du module 1 comporte des bornes 21, 22 de charge et de chauffe, destinées à être connectées à un chargeur extérieur. Les bornes 21, 22 de charge sont distinctes des bornes 23, 24 de connexion aux cellules. Un circuit 50 de gestion de la charge des cellules 10 est interposé entre les bornes 23, 24 de connexion et les bornes 21, 22 de charge. Par les bornes 23, 24 connectées aux deux extrémités des cellules 10 associées en série passent le courant de charge arrivant vers les cellules, et, lorsque le module 1 est branché à un appareil consommateur, le courant de décharge provenant des cellules 10 et le courant de régénération arrivant vers les cellules 10. Bien entendu, dans un mode de réalisation non représenté, les bornes 23, 24 de connexion extérieures pourraient être physiquement distinctes de bornes d'envoi du courant de charge depuis le circuit de gestion de charge, ces bornes d'envoi étant reliées électriquement aux cellules et aux bornes 23, 24 de connexion extérieures.

Les bornes 21, 22 sont reliées à un module 51 de détection de présence du chargeur extérieur, ayant une sortie 52 fournissant un premier signal d'information en l'absence d'application d'une tension de chargeur aux bornes 21, 22, et un deuxième signal de détection de chargeur en cas d'application d'une tension de chargeur aux bornes 21, 22.

Entre les bornes 21, 22 sont également prévus un ou plusieurs organes 33 de chauffage des cellules 10 par résistance électrique, reliés en parallèle aux bornes 21, 22 par des moyens 60 de liaison qui seront décrits ci-dessous. Ces organes 33 sont par exemple formés par des plaques de chauffe.

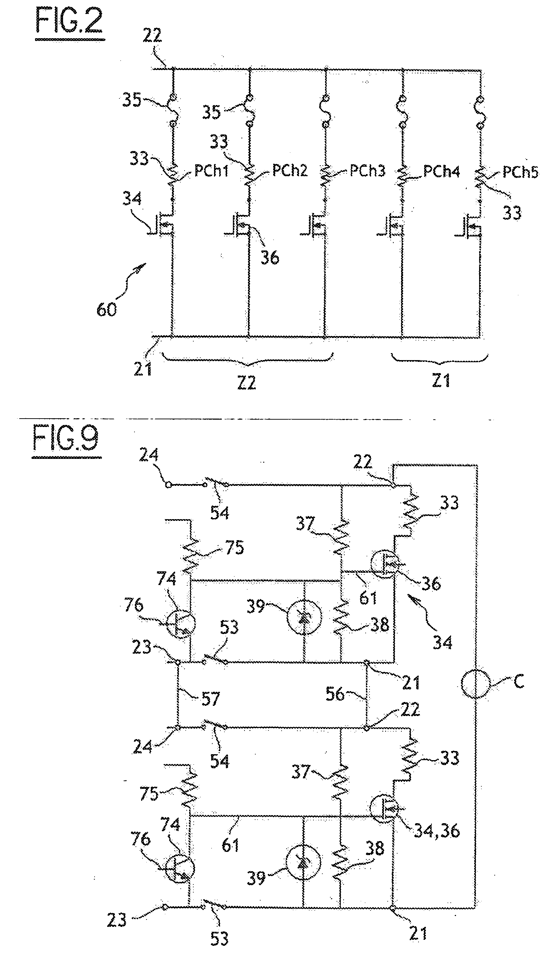

Dans le mode de réalisation représenté à la figure 2, il est prévu des plaques 33 de chauffe dans au moins des première et deuxième zones Z1, Z2 différentes de chauffage dans le module 1, à savoir par exemple dans la zone Z1 des parois du module, par deux plaques Pch4 et Pch5 à la figure 2, et dans la zone centrale Z2 du module, par deux ou trois plaques de chauffe Pch1, Pch2 et Pch3.

Des moyens 53, 54 d'interruption sont prévus entre d'une part les bornes 23, 24 situées du côté des cellules 10 et d'autre part les bornes 21, 22 situées du côté du chargeur et des organes 33 de chauffage. Les moyens 53, 54 d'interruption sont donc interposés entre les moyens 60 de liaison aux organes 33 de chauffage et les bornes 23, 24 d'accès aux cellules, et sont aptes à interrompre le passage du courant de charge des bornes 21, 22 vers les bornes 23, 24 et les cellules 10.

Ces moyens 53, 54 d'interruption sont aptes à être fermés pour faire circuler du courant dans les deux sens entre les bornes 21, 22 et les bornes 23, 24. Ils comportent à la figure 1 un interrupteur 53 entre la borne 21 et la borne 23, et un autre interrupteur 54 entre la borne 22 et la borne 24. Les interrupteurs 53, 54 ont une position de fermeture supportant le passage d'un courant de charge des bornes 21, 22 vers les bornes 23, 24. Ils sont par exemple formés par des relais mécaniques directement implantés sur le circuit imprimé de la carte électronique.

Dans un mode de réalisation non représenté, l'un des interrupteurs 53 et 54 est omis et remplacé par une connexion électrique entre une borne 23 ou 24 d'utilisation et une borne 21 ou 22 de charge, et un moyen 54 ou 53 d'interruption est prévu entre l'autre borne 24 ou 23 d'utilisation et la borne 22 ou 21 de décharge. La connexion électrique peut également se traduire par le fait que la borne extérieure 23 d'utilisation est confondue avec la borne extérieure 21 de charge, ou par le fait que la borne extérieure 24 d'utilisation est confondue avec la borne extérieure 22 de charge.

Des moyens de commande sont prévus pour faire passer les moyens 53, 54 d'interruption entre l'une et l'autre de leurs positions de fermeture et d'interruption. Dans le mode de réalisation de la figure 1, ces moyens de commande comportent un calculateur 28 relié à un actionneur 55 des interrupteurs 53 et 54. Le calculateur 28 est relié à une ou plusieurs unités 26, 27 de mesure de température des cellules 10, ainsi qu'à la sortie 52 du module 51 de détection de présence du chargeur extérieur. Par exemple, l'unité 26 sert à mesurer la température T1 dans la zone Z1 et l'unité 27 sert à mesurer la température T2 dans la zone Z2.

Dans le cas d'une batterie comportant plusieurs modules 1 en série, il peut être prévu un chargeur par module, ainsi que cela est représenté à la figure 3, ou un chargeur commun pour l'ensemble des modules, ainsi que cela est représenté à la figure 4.

A la figure 3, chaque module 1 a, 1b comporte ses propres bornes 21, 22 de charge, qui sont indépendantes des bornes 21, 22 de charge des autres modules de la batterie et qui sont accessibles de l'extérieur par tout moyen approprié pour pouvoir être connectées aux bornes de chargeurs respectifs Ca, Cb.

A la figure 4, les bornes 21, 22 de charge des modules 1 sont reliées en série par des conducteurs 56. La borne 22a de tension haute d'un module 1 a est reliée par un conducteur 56 à la borne 21 b de tension basse du module suivant 1b, la batterie comportant deux bornes extérieures de charge, dont l'une est reliée à la borne 21 a de tension la plus basse de l'ensemble des modules, et dont l'autre est reliée à la borne 22b de tension la plus haute de l'ensemble des modules, ces deux bornes extérieures de charge étant accessibles de l'extérieur par tout moyen approprié pour pouvoir être connectées aux bornes du chargeur commun C.

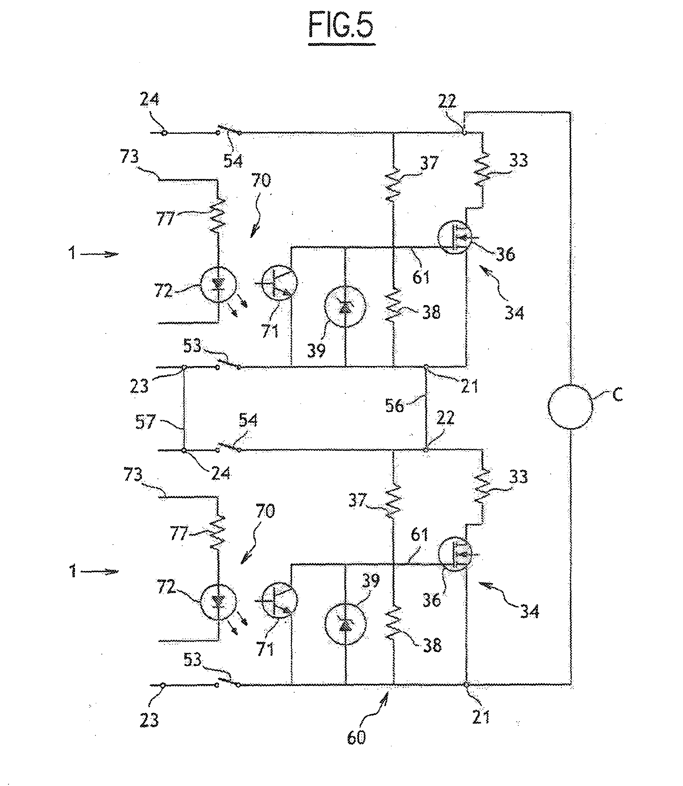

On décrit ci-dessous en référence aux figures 1, 2, 5 et 9 des modes de réalisation des moyens 60 de liaison des organes 33 de chauffage aux bornes 21, 22 de charge dans un module 1. Aux figures 5 et 9, ces modes de réalisation sont représentés pour deux modules 1 en série, sans laisser apparaître les fusibles 35 de protection.

Les moyens 60 de liaison comportent pour chaque organe 33 de chauffage un fusible 35 de protection et un interrupteur 34 de chauffe en série avec l'organe 33 dans une branche de passage de courant de chauffe, cette branche étant reliée par une extrémité à la borne 21 de charge et par l'autre extrémité à l'autre borne 22 de charge. Des moyens d'activation de fermeture sont prévus sur une entrée 61 de contrôle de l'interrupteur 34 de chauffe pour que celui-ci soit automatiquement fermé en présence d'une tension entre les bornes 21, 22 de charge pour le passage du courant de chauffe dans l'organe 33 associé. Des moyens d'activation d'ouverture sont prévus pour que l'interrupteur 34 de chauffe soit ouvert lorsqu'un signal de déclenchement d'ouverture est appliqué sur l'entrée 61 de contrôle de celui-ci.

Aux figures 5 et 9, chaque interrupteur 34 de chauffe est formé par exemple par un transistor MOS à enrichissement 36, dont la section drain - source est en série avec l'organe 33 de chauffage pour le passage du courant de chauffe. Une résistance 37 de polarisation relie la grille 61 du transistor 36 à la borne 22 de charge, tandis qu'une autre résistance 38 de polarisation relie la grille 61 du transistor 36 à la borne 21 de charge, pour former un circuit diviseur de tension. En présence de la tension du chargeur entre les bornes 21, 22 de charge, le transistor 36 conduit automatiquement, les moyens d'activation automatique de fermeture étant alors formés par les résistances 37, 38 de polarisation. Bien entendu, tout autre type de transistor 36 pourrait être prévu pour former l'interrupteur 34 de chauffe, avec la voie principale d'interruption / conduction (drain - source ou collecteur - émetteur par exemple) en série avec l'organe 33 de chauffe.

En outre, des moyens de limitation de la tension de l'entrée de contrôle 61 de l'interrupteur 34 sont prévus. Dans le mode de réalisation des figures 5 et 9, ces moyens de limitation de tension sont formés par une diode Zener 39 branchée en parallèle avec la résistance de polarisation de la section grille - source de contrôle du transistor 36. Dans le cas de la figure 5, où le transistor 36 est du type MOS à canal de type N, ayant son drain relié à l'organe 33 de chauffage et sa source reliée à la borne 21 de charge, la diode Zener 39 est branchée en parallèle avec la résistance 38, en ayant sa cathode reliée à la grille 61 du transistor 36 et son anode reliée à la borne 21. Bien entendu, le transistor 36 pourrait être également du type MOS à enrichissement de type P, ou à appauvrissement de type P ou N comme à la figure 2.

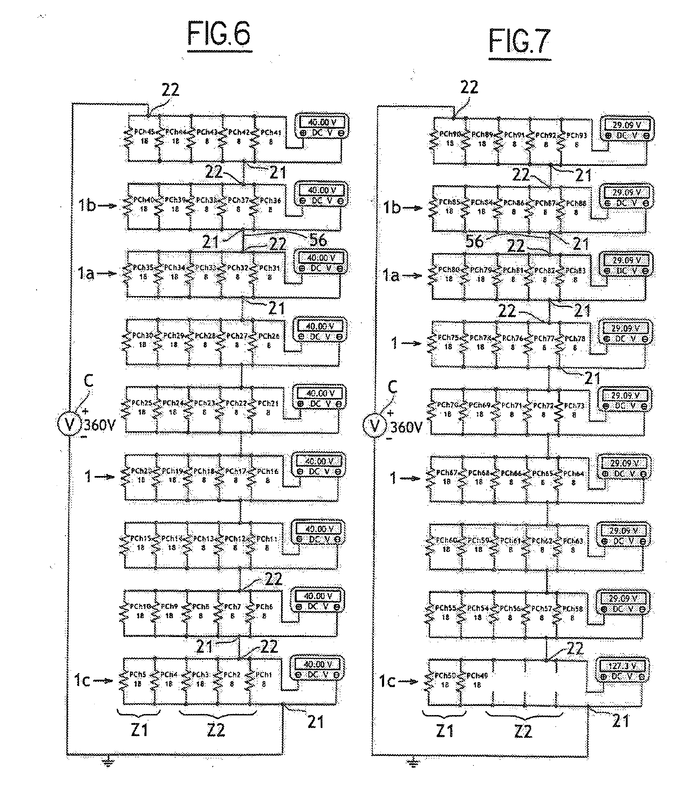

On remédie ainsi aux risques de destruction des interrupteurs 34 de chauffe, pouvant survenir dans le cas où plusieurs modules 1 en série sont alimentés en tension de charge par un unique chargeur C sur leurs bornes 21, 22 de charge mises en série, alors que les moyens 53, 54 d'interruption sont ouverts. La figure 6 montre un tel exemple de batterie, correspondant à la figure 4, comportant neuf modules 1 identiques en série, dont seuls les organes de chauffage PCh sont représentés. Chaque module possède en parallèle deux organes PCh de chauffage ayant chacun une résistance de 18 Ohms (par exemple ceux de la zone Z1 de parois) et trois organes PCh de chauffage ayant chacun une résistance de 8 Ohms (par exemple ceux de la zone centrale Z2). Le chargeur commun C applique une tension totale de 360 Volts aux bornes extrémales 21, 22 des neuf modules 1. Chaque module 1 reçoit donc sur ses propres bornes 21, 22 une tension de 40 Volts, ainsi que symbolisé par l'indication du voltmètre sur chaque module.

Dans le cas où l'un des organes 33 de chauffage est désactivé par ouverture de son interrupteur 34 de chauffe, il fait chuter la résistance globale de chauffe entre ses bornes 21, 22 de charge et donc augmenter la tension reçue par ses autres organes 33 de chauffage. La figure 7 représente ce cas où, dans le module 1 c, les interrupteurs 34 en série avec les trois organes de chauffage de résistance 8 Ohms sont ouverts, empêchant ainsi la circulation de courant dans ces organes, ainsi que cela est symbolisé par les vides entre les bornes 21, 22 du module. Il apparaît alors une tension de 127,3 V aux bornes 21, 22 de ce module 1c et une tension de 29,09 V aux bornes 21, 22 des autres modules 1. Ce cas est potentiellement destructeur des interrupteurs 34 de chauffe du module 1c pour tension excessive.

Aux figures 5 et 9, lorsque la tension entre les bornes 21, 22 de charge du module augmente, la tension entre la grille et la source du transistor 36 augmente jusqu'à se stabiliser à la valeur de limitation définie par la diode Zener 39 en parallèle avec la jonction grille - source. De ce fait, la conduction des transistors 36, correspondant à la fermeture des interrupteurs 34 de chauffe, n'est pas dépendante d'une commutation de commande, ce qui évite la situation destructrice décrite à la figure 7.

Dans la variante de la figure 2, chaque interrupteur 34 de chauffe comprend un transistor MOS à appauvrissement, dont la section drain - source sert au passage du courant de chauffe.

Dans le mode de réalisation de la figure 5, les moyens 70 d'activation d'ouverture de l'interrupteur 34 de chauffe comprennent un coupleur optoélectronique ou opto - coupleur, comportant un photodétecteur 71 relié à l'entrée 61 de contrôle de l'interrupteur 34 de chauffe et une source optique 72 reliée par une résistance 77 à une entrée 73 de commande, elle-même reliée au calculateur 28 par un circuit approprié. Dans le mode de réalisation de la figure 5, le photodétecteur 71 est un phototransistor de type NPN, dont la voie collecteur - émetteur est reliée en parallèle à la section grille - source du transistor 36 et la source optique 72 est une photodiode. Lorsque la photodiode 72 est mise à l'état conducteur par les moyens de commande depuis l'entrée 73, le phototransistor 71 est mis à l'état conducteur avec une tension proche de zéro sur sa voie collecteur - émetteur, ce qui met à zéro la tension grille-source du transistor 36 de chauffe. Le transistor 36 de chauffe passe alors à l'état ouvert, interrompant le passage de courant dans l'organe 33 de chauffe. Lorsque la photodiode 72 n'est pas mise à l'état conducteur par les moyens de commande, le phototransistor 71 est mis à l'état non conducteur, ne modifiant pas le fonctionnement des moyens d'activation automatique de fermeture.

La figure 9 est une variante de la figure 5. A la figure 9, les moyens 70 d'activation d'ouverture de l'interrupteur 34 de chauffe comprennent un interrupteur 74 dont la voie d'interruption / conduction de courant est reliée en parallèle du circuit série formé par la section grille - source du transistor 36 de chauffe et l'interrupteur 53, et dont la borne 76 de contrôle sert d'entrée de commande d'ouverture. L'interrupteur 74 est par exemple formé par un transistor bipolaire, dont la voie d'interruption / conduction de courant est formée par la section collecteur - émetteur. Une résistance 75 reliée à la grille 61 du transistor 36 permet d'amener du courant au transistor 74. Le transistor 74 est par exemple du type NPN, dont le collecteur est relié à la grille 61 du transistor 36 et dont l'émetteur est relié au côté de l'interrupteur 53, autre que celui relié à la borne 21 de charge reliée à la source du transistor 36. Le transistor 74 ne peut donc être actif que lorsque l'interrupteur 53 est fermé. On empêche ainsi une commande d'ouverture de l'interrupteur 34 de chauffe lorsque l'interrupteur 53 est ouvert, en remédiant ainsi au problème précité de désactivation d'un organe 33 de chauffe, mentionné en référence à la figure 7. Lorsque, l'interrupteur 53 étant fermé, le transistor 74 est mis à l'état conducteur par commande de sa borne 76, sa tension collecteur - émetteur devient proche de zéro, ce qui commande par l'entrée 61 le passage à l'état ouvert du transistor 36. Au contraire, lorsque le transistor 74 est laissé à l'état non conducteur, il ne court-circuite pas l'entrée 61 de commande du transistor 36. Bien entendu, tout autre type de transistor 76 pourrait être utilisé.

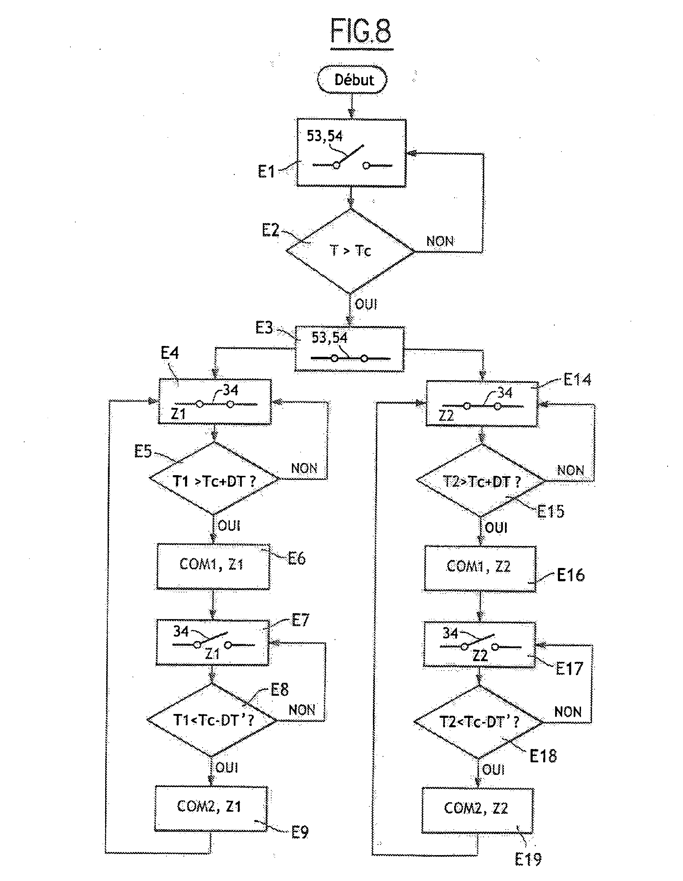

Le procédé de charge des cellules se déroule par exemple de la manière suivante, ainsi que cela est décrit à la figure 8.

Au cours d'une première phase préalable de chauffe, les moyens de commande maintiennent initialement les moyens 53, 54 d'interruption en position d'ouverture, pour déconnecter les cellules 10 des bornes 21, 22 de charge lors de l'étape E1. Le module est dit alors en mode quatre points, dans lequel les bornes 23, 24 d'utilisation sont déconnectées des bornes 21, 22 de charge.

L'utilisateur connecte alors un chargeur extérieur par tout moyen approprié aux deux bornes 21, 22 de charge, pour y appliquer une tension de chauffe. Cette tension de chauffe appliquée par le chargeur aux bornes 21, 22 de charge démarre en croissant à partir de zéro Volt jusqu'à une valeur prescrite maximale. Les interrupteurs 34 de chauffe sont alors en position pour permettre le passage de courant de chauffe dans le ou les organes 33 de chauffage.

Lorsque la tension entre les bornes 21, 22 de charge dépasse un seuil prédéterminé, compris entre zéro Volt et la valeur prescrite maximale, le module 51 détecte que le chargeur est présent et envoie par la sortie 52 au calculateur 28 le signal de détection de chargeur.

La tension de chauffe appliquée aux bornes 21, 22 de charge fait circuler un courant dans les organes 33 de chauffage, qui augmentent ainsi la température des cellules 10. Du fait de la déconnexion entre les bornes 23, 24 reliées aux cellules et les bornes 21, 22 de charge par l'intermédiaire des moyens 53, 54 d'interruption, la tension du chargeur ne fait circuler aucun courant de charge du chargeur vers les cellules 10, évitant ainsi de les charger à froid.

A l'étape E2 faisant suite à l'étape E1, le calculateur 28 surveille au cours du temps la température T1 et/ou T2 mesurée par l'unité 26 et/ou 27. Lorsque le calculateur 28 détermine que la température T du module, qui est cette température T1 ou T2, ou la température minimum des unités de mesure de température, atteint une valeur Tc prédéterminée d'autorisation de charge, le calculateur 28 commande à l'étape E3 par l'intermédiaire de l'actionneur 55 le passage de chaque interrupteur 53, 54 de la position d'interruption à la position de fermeture, dans une deuxième phase de charge, succédant à la première phase de chauffe. Cette valeur Tc prédéterminée de température d'autorisation de charge est égale à la température nominale de fonctionnement en charge, égale à 90°C dans l'exemple indiqué ci-dessus.

La tension du chargeur, appliquée aux bornes 21, 22, est alors transmise via les moyens 53, 54 d'interruption fermés aux bornes 23, 24 des cellules 10 pour charger celles-ci. Les-cellules 10 reçoivent alors du chargeur un courant de charge par l'intermédiaire des bornes 21, 22, des moyens 53, 54 d'interruption fermés et des bornes 23, 24. Le module est dit alors en mode deux points.

Le calculateur 28 commande l'ouverture et la fermeture des interrupteurs 34 de chauffe pendant la deuxième phase de charge des cellules 10. Ces commandes sont effectuées en fonction d'un algorithme de gestion de température des cellules, par exemple pour maintenir la ou les températures T1 et/ou T2 mesurée(s) par les unités 26, 27 au-dessus d'une température minimale prescrite de charge des cellules.

Dans le mode de réalisation de la figure 8, les interrupteurs 34 de chauffe des organes 33 de chauffe sont encore en position de fermeture après la phase initiale de chauffe, aux étapes E4 et E14 faisant chacune suite à l'étape E3. La figure 8 représente à gauche les étapes E4, E5, E6, E7, E8, E9 exécutées par les interrupteurs 33 de chauffe d'une première zone Z1 du module, comme par exemple la zone des parois, et à droite les étapes E14, E15, E16, E17, E18, E19 exécutées par les interrupteurs 33 de chauffe d'une deuxième zone Z2 du module, comme par exemple la zone centrale. On décrit ci-dessous les étapes E4, E5, E6, E7, E8, E9 pour la température T1 de la première zone, étant entendu que les étapes E14, E15, E16, E17, E18, E19 pour la température T2 de la deuxième zone sont analogues aux étapes E4, E5, E6, E7, E8, E9.

Après l'étape E4, le calculateur 28 teste à l'étape E5 si la température T1 mesurée est supérieure de plus d'un incrément DT à la température nominale Tc de fonctionnement en charge. Dans la négative à l'étape E5, il est retourné à l'étape E4. Dans l'affirmative à l'étape E5, le calculateur 28 envoie à l'étape E6 un signal COM1 de commande d'ouverture aux moyens 70 d'activation associés aux organes 33 de chauffe de la première zone. Il s'ensuit à l'étape E7 l'ouverture des interrupteurs 34 de chauffe associés, faisant cesser le passage de courant dans les organes 33 de chauffe de la première zone.

Puis, à l'étape E8, le calculateur 28 teste si la température T1 mesurée est inférieure de plus d'un incrément DT' à la température nominale Tc de fonctionnement en charge. Dans la négative à l'étape E8, il est retourné à l'étape E7. Dans l'affirmative à l'étape E8, le calculateur 28 envoie à l'étape E9 un signal COM2 de commande de fermeture aux moyens 37, 38 d'activation associés aux organes 33 de chauffe de la première zone, par le fait qu'il n'envoie plus de signal de commande d'ouverture aux moyens 70. Il est alors repassé à l'étape E4 de fermeture des interrupteurs 34 de chauffe associés, faisant passer du courant dans les organes 33 de chauffe de la première zone.

Dans un autre mode de réalisation, les ouvertures et fermetures des interrupteurs 34 de chauffe sont cycliques, avec une période prédéterminée.

Dans ce qui précède, en phase de charge, les organes 33 de chauffe sont activés par fermeture de leur interrupteur 34 ou inactivés par ouverture de leur interrupteur 34, de manière désynchronisée pour lisser les appels de courant liés à la chauffe.

Ainsi, toute commutation des interrupteurs de chauffe, tant que chaque module ne gère pas son autonomie de chauffe, est évitée, et les phases de commutation entre les modes deux points et quatre points sont gérées de manière rigoureuse, pour protéger les interrupteurs de toute destruction.

Suivant l'invention, on a formé un pack de batterie comportant plusieurs modules en série pour former une batterie. Ce pack de batterie est fonctionnel, en ce sens qu'il a pu être installé et utilisé avec succès sur un véhicule automobile terrestre motorisé sur roues entièrement électrique (formé par une voiture à deux roues avant et deux roues arrière, dont le poids total équipé avec le pack de batterie est d'une tonne environ), c'est-à-dire dont la chaîne de traction est alimentée en énergie uniquement par ce pack de batterie pour propulser deux roues du véhicule.

De plus, le véhicule peut être doté d'une structure embarquée de charge, pouvant évoluer d'une baie de n chargeurs pour n modules à un chargeur unique pour les n modules. Pour recharger les modules à l'arrêt du véhicule, on branche une alimentation électrique extérieure, par exemple une alimentation classique depuis un réseau électrique, tel que par exemple le secteur à 230 Volts en France, sur un accès prévu à cet effet sur la structure de charge.

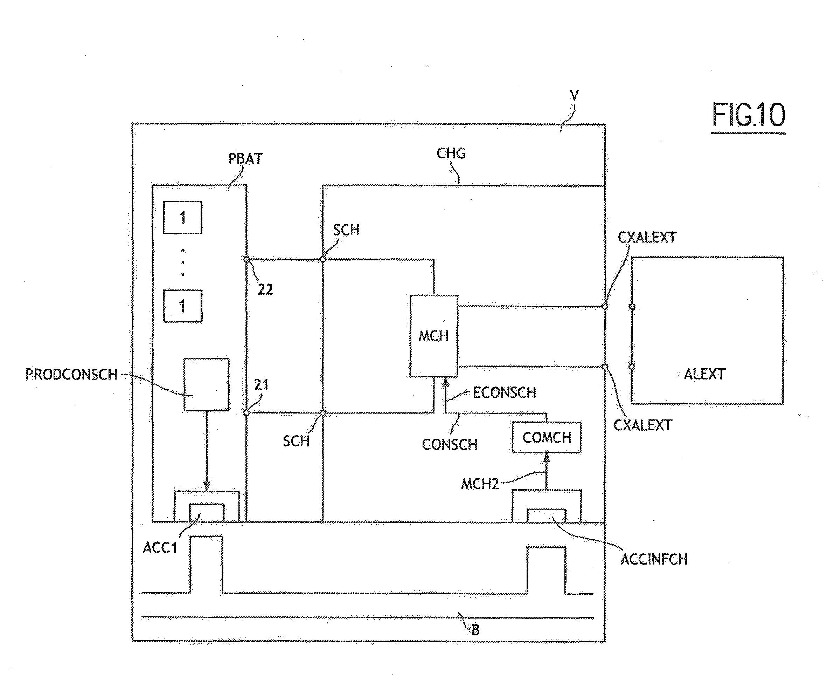

Dans le mode de réalisation représenté à la figure 10, le véhicule V comporte un pack PBAT de plusieurs modules 1, ainsi qu'une structure de charge ayant au moins un chargeur (CHG) pour la charge des modules de batterie,
le chargeur (CHG) comportant :
- au moins un accès (CXALEXT) de connexion du chargeur (CHG) à une alimentation électrique extérieure,
- des bornes (SCH) de sortie reliées électriquement aux bornes de charge (21, 22) des modules,
- un moyen (MCH) de charge en énergie électrique des cellules à partir de l'alimentation électrique extérieure (ALEXT), le moyen (MCH) de charge étant relié aux bornes (SCH) de sortie.

Suivant un mode de réalisation, le chargeur (CHG) comporte :
- un deuxième accès (ACCINFCH) de communication avec l'extérieur du chargeur, apte à recevoir au moins un message (MCH2) contenant la consigne quantitative de charge (CONSCH),
- des moyens automatiques de commande (COMCH) reliés au deuxième accès (ACCINFCH) de communication pour imposer au moyen de charge la consigne quantitative de charge (CONSCH), le moyen (MCH) de charge étant prévu pour charger en énergie électrique les cellules à partir de l'alimentation électrique extérieure (ALEXT) suivant la consigne quantitative de charge (CONSCH) présente sur le deuxième accès (ACCINFCH) de communication.

La batterie comporte un moyen (PRODCONSCH) de production de la consigne quantitative de charge (CONSCH) des modules et un premier accès (ACC1) de communication vers l'extérieur relié au deuxième accès (ACCINFCH) de communication du chargeur pour lui transmettre la consigne quantitative de charge (CONSCH). Par exemple, le moyen (PRODCONSCH) de production de la consigne quantitative de charge (CONSCH) des modules est prévu sur l'un des modules du pack de batterie.

Dans l'exemple de réalisation décrit ci-dessus, les premier et deuxièmes accès sont prévus pour être du type bus B. Les premier et deuxièmes accès sont reliés par exemple par un bus CAN du véhicule automobile.

Dans un mode de réalisation, l'accès CXALEXT de connexion du chargeur CHG à une alimentation électrique extérieure est formé par une simple connexion à deux conducteurs.

Dans un mode de réalisation, un chargeur unique CHG est prévu sur le véhicule V pour l'ensemble des modules 1 du pack PBAT de batterie, ainsi que cela a été décrit ci-dessus.

## Revendications

1. Module de batterie de puissance, comportant une multiplicité de cellules (10) rechargeables ayant une température nominale de fonctionnement en charge, supérieure à 20°C, deux bornes extérieures (23, 24) d'utilisation des cellules et au moins un organe de chauffage électrique des cellules,
**caractérisé en ce qu'**il comporte en outre un circuit (50) de gestion de charge des cellules lequel comporte :
- deux bornes extérieures (21, 22) de charge des cellules, qui sont destinées à être connectées à un chargeur extérieur et dont au moins l'une, appelée deuxième borne de charge, est distincte des bornes (23, 24) d'utilisation,
- des premiers moyens (53, 54) d'interruption / connexion entre ladite au moins une deuxième borne (21, 22) de charge et au moins l'une des bornes (23, 24) d'utilisation, appelée première borne (23, 24) d'utilisation, les premiers moyens (53, 54) d'interruption / connexion étant aptes à se trouver dans l'une ou l'autre d'une première position d'interruption pour empêcher le passage de courant entre la deuxième borne (21, 22) de charge et la première borne (23, 24) d'utilisation, et d'une deuxième position de connexion de la deuxième borne (21, 22) de charge et de la première borne (23, 24) d'utilisation,
- des deuxièmes moyens (60) de liaison entre les bornes (21, 22) de charge et l'organe (33) de chauffage pour relier, au moins dans la première position d'interruption des premiers moyens d'interruption / connexion, les bornes (21, 22) de charge à l'organe (33) de chauffage pour l'alimentation de l'organe (33) de chauffage en électricité.

2. Module de batterie suivant la revendication 1, **caractérisé en ce que** les deux bornes (21, 22) de charge sont des deuxièmes bornes de charge, distinctes des bornes (23, 24) d'utilisation, appelées premières bornes d'utilisation, les premiers moyens (53, 54) d'interruption / connexion étant prévus entre les deuxièmes bornes (21, 22) et les premières bornes (23, 24).

3. Module de batterie suivant l'une quelconque des revendications précédentes, **caractérisé en ce que** les deuxièmes moyens (60) de liaison comprennent au moins un interrupteur (34) de chauffe, ayant une entrée (61) de contrôle d'ouverture et de fermeture, en série avec l'organe (33) de chauffage, ce circuit série étant connecté entre les bornes (21, 22) de charge,
l'entrée (61) de contrôle étant reliée et à des moyens (70) d'activation d'ouverture comportant une entrée (73, 76) de commande pour mettre l'interrupteur de chauffe en position d'ouverture en présence d'un signal de commande d'ouverture sur ladite entrée de commande (73, 76),
des troisièmes moyens étant prévus dans le module pour que la fermeture de l'interrupteur (34) de chauffe soit indépendante des moyens (70) d'activation d'ouverture et de l'entrée (73, 76) de commande.

4. Module de batterie suivant l'une quelconque des revendications précédentes, **caractérisé en ce que** les deuxièmes moyens (60) de liaison comprennent au moins un interrupteur (34) de chauffe, ayant une entrée (61) de contrôle d'ouverture et de fermeture, en série avec l'organe (33) de chauffage, ce circuit série étant connecté entre les bornes (21, 22) de charge,
l'entrée (61) de contrôle étant reliée à des troisièmes moyens (37, 38) d'activation automatique de fermeture de l'interrupteur (34) de chauffe en présence d'une tension entre les bornes (21, 22) de charge, et à des moyens (70) d'activation d'ouverture comportant une entrée (73, 76) de commande pour mettre l'interrupteur de chauffe en position d'ouverture en présence d'un signal de commande d'ouverture sur ladite entrée de commande (73, 76).

5. Module de batterie suivant la revendication 3 ou 4, **caractérisé en ce que** l'entrée (73) de commande des moyens (70) d'activation d'ouverture est opto - isolée par rapport à l'entrée (61) de contrôle de l'interrupteur (34) de chauffe.

6. Module de batterie suivant la revendication 3 ou 4, **caractérisé en ce que** les moyens (70) d'activation d'ouverture comportent un interrupteur (74), dont la voie principale d'interruption / conduction de courant est reliée en parallèle du circuit série formé par l'interrupteur (34) de chauffe et le moyen (53) d'interruption et dont la borne (76) de contrôle sert d'entrée de commande d'ouverture.

7. Module de batterie suivant l'une quelconque des revendications 3 à 6, **caractérisé en ce que** les troisièmes moyens (37, 38) comprennent des organes (37, 38) de polarisation de l'entrée (61) de contrôle à partir des bornes (21, 22) de charge.

8. Module de batterie suivant l'une quelconque des revendications précédentes, **caractérisé en ce que** les deuxièmes moyens (60) de liaison comprennent en série avec l'organe (33) de chauffage au moins un interrupteur (34) de chauffe, ayant une entrée (61) de contrôle d'ouverture et de fermeture, ce circuit série étant connecté entre les bornes (21, 22) de charge,
l'entrée (61) de contrôle de l'interrupteur (34) de chauffe étant reliée à un moyen (39) de limitation de tension.

9. Module de batterie suivant la revendication 8, **caractérisé en ce que** le moyen (39) de limitation de tension comprend au moins une diode Zener.

10. Module de batterie suivant l'une quelconque des revendications 3 à 9, **caractérisé en ce que** l'interrupteur (34) de chauffe comporte au moins un transistor (36), dont la voie principale d'interruption / conduction de courant est en série avec l'organe (33) de chauffage et dont la borne de contrôle de la voie principale sert d'entrée (61) de contrôle.

11. Module de batterie suivant la revendication 10, **caractérisé en ce que** le transistor (36) de l'interrupteur (34) de chauffe est un transistor MOS, dont la section drain - source forme la voie principale d'interruption / conduction de courant et dont la grille sert d'entrée (61) de contrôle.

12. Module de batterie suivant les revendications 9 et 11 prises ensemble, **caractérisé en ce que** la diode Zener est en parallèle avec la section grille - source du transistor MOS (36) de l'interrupteur (34) de chauffe.

13. Module de batterie suivant l'une quelconque des revendications précédentes, **caractérisé en ce que** les deuxièmes moyens (60) de liaison comprennent, en série avec l'organe (33) de chauffage entre les bornes (21, 22) de charge, au moins un fusible thermique (35) de protection contre des températures excédant une température prescrite supérieure à la température nominale de fonctionnement en charge des cellules.

14. Module de batterie suivant l'une quelconque des revendications précédentes, **caractérisé en ce qu'**il comporte au moins une unité (26, 27) de mesure de la température en au moins une zone du module, et des moyens (28) de commande de la position des premiers moyens (53, 54) d'interruption / connexion,
lesdits moyens (28) de commande étant sensibles à la température mesurée par l'unité (26, 27) de mesure pour commander le passage dans la position de connexion des premiers moyens (53, 54) d'interruption / connexion; lorsque la température minimale fournie par l'unité (26, 27) de mesure est supérieure ou égale à la température nominale de fonctionnement en charge prescrite auxdits moyens (28) de commande.

15. Module de batterie suivant l'une quelconque des revendications précédentes, **caractérisé en ce que** les deuxièmes moyens (60) de liaison comprennent au moins un interrupteur (34) de chauffe, ayant une entrée (61) de contrôle d'ouverture et de fermeture, en série avec l'organe (33) de chauffage, ce circuit série étant connecté entre les bornes (21, 22) de charge,
le module comportant des moyens (28) de commande reliés à l'entrée (61) de contrôle pour ouvrir l'interrupteur (34) de chauffe seulement en position de connexion des premiers moyens (53, 54) d'interruption / connexion.

16. Module de batterie suivant les revendications 14 et 15 prises ensemble, **caractérisé en ce que** l'organe (33) de chauffage est respectivement associé à l'unité (26, 27) de mesure de température dans ladite zone (Z1, Z2) du module, et
les moyens (28) de commande sont prévus pour, en position de connexion des premiers moyens (53, 54) d'interruption / connexion, provoquer l'ouverture de l'interrupteur (34) de chauffe lorsque la température mesurée de l'unité (26, 27) associée devient supérieure à une première température prescrite (Tc+DT), supérieure à la température nominale de fonctionnement en charge, et provoquer la fermeture de l'interrupteur (34) de chauffe lorsque la température mesurée de l'unité (26, 27) associée devient inférieure à une deuxième température prescrite (Tc-DT), inférieure à la température nominale de fonctionnement en charge et supérieure à 20°C.

17. Module de batterie suivant l'une quelconque des revendications 14 et 16, **caractérisé en ce qu'**il est prévu une unité de mesure (26, 27) de température en au moins deux zones différentes (Z1, Z2) du module.

18. Module de batterie suivant l'une quelconque des revendications précédentes, **caractérisé en ce que** les cellules sont réalisées par des assemblages de films minces.

19. Module de batterie suivant l'une quelconque des revendications précédentes, **caractérisé en ce que** les cellules ont une température nominale de fonctionnement en charge, supérieure à 80 °C.

20. Module de batterie suivant l'une quelconque des revendications précédentes, **caractérisé en ce que** les cellules sont du type lithium - métal - polymère.

21. Module de batterie suivant l'une quelconque des revendications précédentes, **caractérisé en ce qu'**il comporte un moyen de production d'une consigne quantitative de charge et un premier accès de communication vers l'extérieur, apte à transmettre la consigne quantitative de charge.

22. Batterie, **caractérisée en ce qu'**elle comporte dans un boîtier de batterie une pluralité de modules de batterie suivant l'une quelconque des revendications précédentes, les modules étant reliés par leurs bornes (23, 24) d'utilisation dans le boîtier, la batterie comportant au moins deux bornes (23, 24) d'utilisation, accessibles à l'extérieur du boîtier et reliées aux modules, et au moins deux bornes (21, 22) de charge, accessibles à l'extérieur du boîtier et reliées aux modules.

23. Batterie suivant la revendication 22, **caractérisée en ce que** les bornes (23, 24) d'utilisation des modules sont reliées l'une à la suite de l'autre en série dans le boîtier, l'une des bornes extérieures (23, 24) d'utilisation est reliée à la borne (23) d'utilisation de tension la plus basse de l'ensemble des modules et l'autre borne extérieure (24) d'utilisation de la batterie est reliée à la borne (24) d'utilisation de tension la plus haute de l'ensemble des modules.

24. Batterie suivant l'une quelconque des revendications 22 et 23, **caractérisée en ce que** les bornes (21, 22) de charge de chaque module sont accessibles à l'extérieur du boîtier.

25. Batterie suivant l'une quelconque des revendications 22 et 23, **caractérisée en ce que** les modules sont reliés par leurs bornes (21, 22) de charge dans le boîtier, la batterie comportant deux bornes (21, 22) de charge, accessibles à l'extérieur du boîtier et reliées aux modules.

26. Batterie suivant la revendication 23, **caractérisée en ce que** les bornes (21, 22) de charge des modules sont reliées l'une à la suite de l'autre en série dans le boîtier, l'une des bornes extérieures (21, 22) de charge est reliée à la borne (21) de charge de tension la plus basse de l'ensemble des modules et l'autre borne extérieure (22) de charge de la batterie est reliée à la borne (22) de charge de tension la plus haute de l'ensemble des modules.

27. Batterie suivant l'une quelconque des revendications 22 à 26, **caractérisée en ce que** la batterie comporte un moyen de production d'une consigne quantitative de charge des modules et un premier accès de communication vers l'extérieur, apte à transmettre la consigne quantitative de charge.

28. Procédé de charge d'un module de batterie suivant l'une quelconque des revendications 1 à 21 à partir d'un chargeur extérieur, **caractérisé en ce que**
la au moins une deuxième borne extérieure (21, 22) de charge est d'abord déconnectée par rapport à la au moins une première borne extérieure (23, 24) d'utilisation distincte de la au moins une deuxième borne extérieure (21, 22) de charge,
le chargeur est connecté aux bornes extérieures (21, 22) de charge pour y appliquer une tension,
l'organe (33) de chauffage est connecté aux bornes extérieures (21, 22) de charge pour chauffer les cellules (10) du module à partir de la tension du chargeur au moins à la température nominale de fonctionnement en charge au cours d'une phase initiale de chauffage, et
après la phase initiale de chauffage, on connecte la au moins une première borne extérieure (23, 24) d'utilisation à la au moins une deuxième borne extérieure (21, 22) de charge pour charger les cellules (10) à partir de la tension du chargeur.

29. Procédé suivant la revendication 28, **caractérisé en ce que** les deux bornes (21, 22) de charge sont des deuxièmes bornes de charge, distinctes des bornes (23, 24) d'utilisation, appelées premières bornes d'utilisation,
avant et pendant la phase initiale de chauffage, les deux bornes (21, 22) de charge sont déconnectées par rapport aux bornes (23, 24) d'utilisation, jusqu'à ce que les cellules soient chauffées à leur température nominale de fonctionnement en charge,
après la phase initiale de chauffage, les cellules sont chargées à partir de la tension du chargeur depuis les deuxièmes bornes (21, 22) de charge, par connexion des bornes (21, 22) de charge aux bornes (23, 24) d'utilisation des cellules.

30. Procédé suivant l'une quelconque des revendications 28 et 29, **caractérisé en ce qu'**au moins une unité de mesure (26, 27) prévue en au moins une zone (Z1, Z2) du module mesure la température,
un calculateur (28) du module, relié à l'unité (26, 27) de mesure, surveille la température mesurée des cellules et commande la connexion de la au moins une première borne extérieure (23, 24) d'utilisation à la au moins une deuxième borne extérieure (21, 22) de charge lorsque la température minimale mesurée est supérieure ou égale à la température nominale de fonctionnement en charge.

31. Procédé suivant l'une quelconque des revendications 28 à 30, **caractérisé en ce qu'**au moins un interrupteur (34) de chauffe, comportant une entrée (61) de contrôle d'ouverture et de fermeture, est en série avec l'organe (33) de chauffage, ce circuit série étant connecté entre les deux bornes extérieures (21, 22) de charge,
l'interrupteur (34) de chauffe est automatiquement fermé en présence de la tension du chargeur sur les bornes extérieures (21, 22) de charge pendant la phase initiale de chauffage,
un calculateur du module ne commande l'entrée de contrôle pour provoquer au moins temporairement l'ouverture de l'interrupteur de chauffe que lorsque les bornes (21, 22) de charge sont connectées aux bornes (23, 24) d'utilisation des cellules.

32. Procédé suivant les revendications 30 et 31 prises ensemble, **caractérisé en ce que** l'organe (33) de chauffage est respectivement associé à l'unité (26, 27) de mesure de température dans ladite zone (Z1, Z2) du module, et
lorsque les bornes (21, 22) de charge sont connectées aux bornes (23, 24) d'utilisation des cellules, le calculateur commande l'entrée (61) de contrôle pour provoquer l'ouverture de l'interrupteur (34) de chauffe lorsque la température mesurée de l'unité (26, 27) associée devient supérieure à une première température prescrite (Tc+DT), supérieure à la température nominale de fonctionnement en charge, et pour provoquer la fermeture de l'interrupteur (34) de chauffe lorsque la température mesurée de l'unité (26, 27) associée devient inférieure à une deuxième température prescrite (Tc-DT), inférieure à la température nominale de fonctionnement en charge et supérieure à 20°C.

33. Procédé suivant l'une quelconque des revendications 30 et 32, **caractérisé en ce qu'**il est prévu une unité de mesure (26, 27) de température en au moins deux zones différentes (Z1, Z2) du module.

34. Procédé suivant l'une quelconque des revendications 28 à 33, **caractérisé en ce que** le module de batterie est logé dans un véhicule automobile.

35. Véhicule automobile, comportant une chaîne de traction et au moins une batterie suivant l'une quelconque des revendications 22 à 27, pour alimenter au moins temporairement la chaîne de traction par de l'énergie électrique.

36. Véhicule automobile suivant la revendication 35, **caractérisé en ce qu'**il comporte en outre une structure de charge ayant au moins un chargeur (CHG) pour la charge des modules de batterie,
le chargeur (CHG) comportant :
- au moins un accès (CXALEXT) de connexion du chargeur (CHG) à une alimentation électrique extérieure,
- des bornes (SCH) de sortie reliées électriquement aux bornes de charge (21, 22) des modules,
- un moyen (MCH) de charge en énergie électrique des cellules à partir de l'alimentation électrique extérieure (ALEXT), le moyen (MCH) de charge étant relié aux bornes (SCH) de sortie.

37. Véhicule automobile suivant la revendication 36, **caractérisé en ce que** le chargeur (CHG) comporte :
- un deuxième accès (ACCINFCH) de communication avec l'extérieur du chargeur, apte à recevoir au moins un message (MCH2) contenant la consigne quantitative de charge (CONSCH),
- des moyens automatiques de commande (COMCH) reliés au deuxième accès (ACCINFCH) de communication pour imposer au moyen de charge la consigne quantitative de charge (CONSCH), le moyen (MCH) de charge étant prévu pour charger en énergie électrique les cellules à partir de l'alimentation électrique extérieure (ALEXT) suivant la consigne quantitative de charge (CONSCH) présente sur le deuxième accès (ACCINFCH) de communication.

38. Véhicule automobile suivant la revendication 37, **caractérisé en ce que** la batterie comporte un moyen de production d'une consigne quantitative de charge des modules et un premier accès de communication vers l'extérieur relié au deuxième accès (ACCINFCH) de communication du chargeur pour lui transmettre la consigne quantitative de charge.

## Claims

1. A power battery module, comprising a multiplicity of rechargeable cells (10) having a nominal operating charging temperature, greater than 20°C, two external use terminals (23, 24) for using the cells and at least one electric element for heating of the cells,
**characterised in that** it further comprises a circuit (50) for managing charging of the cells, which comprises:
- two external charging terminals (21, 22) for charging of the cells, wherein said two external charging terminals (21, 22) are intended to be connected to an external charger, wherein at least one, called second charging terminal, of the two external charging terminals (21, 22) is distinct from the two external use terminals (23, 24),
- first interruption / connection means (53, 54) between said at least one second charging terminal (21, 22) and at least one of the use terminals (23, 24), called first use terminal (23, 24),
the first interruption / connection means (53, 54) being able to be in one or the other of a first interruption position to prevent the flow of current between the second charging terminal (21, 22) and the first use terminal (23, 24), and of a second connection position for connecting the second charging terminal (21, 22) and the first use terminal (23, 24),
- second linking means (60) between the charging terminals (21, 22) and the heating element (33) to connect, at least in the first interruption position of the first interruption / connection means, the charging terminals (21, 22) to the heating element (33) to supply the heating element (33) with electricity.

2. The battery module as claimed in Claim 1, **characterised in that** the two charging terminals (21, 22) are second charging terminals, distinct from the use terminals (23, 24), called first use terminals, the first interruption / connection means (53, 54) being provided between the second terminals (21, 22) and the first terminals (23, 24).

3. The battery module as claimed in any one of the preceding claims, **characterised in that** the second linking means (60) comprise at least one heating interrupter (34), having an opening and closing control input (61), in series with the heating element (33), this series circuit being connected between the charging terminals (21, 22),
the control input (61) being connected to opening activation means (70) comprising a control input (73, 76) for putting the heating interrupter in an opening position in the presence of an opening control signal on said control input (73, 76),
third means being provided in the module so that closing of the heating interrupter (34) is independent from the opening activation means (70) and from the control input (73, 76).

4. The battery module as claimed in any one of the preceding claims, **characterised in that** the second linking means (60) comprise at least one heating interrupter (34), having an opening and closing control input (61), in series with the heating element (33), this series circuit being connected between the charging terminals (21, 22),
the control input (61) being connected to third means (37, 38) for automatic closing activation of the heating interrupter (34) in the presence of voltage between the charging terminals (21, 22), and to opening activation means (70) comprising a control input (73, 76) for putting the heating interrupter in an opening position in the presence of an opening control signal on said control input (73, 76).

5. The battery module as claimed in Claim 3 or 4, **characterised in that** the control input (73) of the opening activation means (70) is opto-insulated relative to the control input (61) of the heating interrupter (34).

6. The battery module as claimed in Claim 3 or 4, **characterised in that** the opening activation means (70) comprise an interrupter (74), having a principal current interruption / conduction path which is connected in parallel to the series circuit formed by the heating interrupter (34) and the interruption means (53) and having a control terminal (76) serving as opening control input.

7. The battery module as claimed in any one of Claims 3 to 6, **characterised in that** the third means (37, 38) comprise elements (37, 38) for biasing of the control input (61) from the charging terminals (21, 22).

8. The battery module as claimed in any one of the preceding claims, **characterised in that** the second linking means (60) comprise in series with the heating element (33) at least one heating interrupter (34), having an opening and closing control input (61), this series circuit being connected between the charging terminals (21, 22),
the control input (61) of the heating interrupter (34) being connected to voltage limitation means (39).

9. The battery module as claimed in Claim 8, **characterised in that** the voltage limitation means (39) comprise at least one Zener diode.

10. The battery module as claimed in any one of Claims 3 to 9, **characterised in that** the heating interrupter (34) comprises at least one transistor (36), having a principal current interruption / conduction path which is in series with the heating element (33) and having a control terminal for controlling the principal path and serving as control input (61).

11. The battery module as claimed in Claim 10, **characterised in that** the transistor (36) of the heating interrupter (34) is a MOS transistor, having a drain-source section which forms the principal current interruption / conduction path and having a gate serving as control input (61).

12. The battery module as claimed in Claims 9 and 11 as a whole, **characterised in that** the Zener diode is in parallel with the gate-source section of the MOS transistor (36) of the heating interrupter (34).

13. The battery module as claimed in any one of the preceding claims, **characterised in that** the second linking means (60) comprise, in series with the heating element (33) between the charging terminals (21, 22), at least one thermal fuse (35) protecting against temperatures exceeding a preset temperature greater than the nominal operating charging temperature of the cells.

14. The battery module as claimed in any one of the preceding claims, **characterised in that** it comprises at least one unit (26, 27) for measuring the temperature in at least one zone of the module, and control means (28) for controlling of the position of the first interruption / connection means (53, 54),
said control means (28) being sensitive to the temperature measured by the measuring unit (26, 27) in order to operate the first interruption / connection means (53, 54) into the connection position, when the minimal temperature provided by the measuring unit (26, 27) is greater than or equal to the nominal operating charging temperature preset to said control means (28).

15. The battery module as claimed in any one of the preceding claims, **characterised in that** the second linking means (60) comprise at least one heating interrupter (34), having an opening and closing control input (61), in series with the heating element (33), this series circuit being connected between the charging terminals (21, 22),
the module comprising control means (28) connected to the control input (61) for opening the heating interrupter (34) only when the first interruption / connection means (53, 54) is in the connection position.

16. The battery module as claimed in Claims 14 and 15 taken as a whole, **characterised in that** the heating element (33) is respectively associated with the temperature-measuring unit (26, 27) in said zone (Z1, Z2) of the module, and
the control means (28) are provided to cause, when of the first interruption / connection means (53, 54) is in the connection position, the heating interrupter (34) to open when the measured temperature of the associated unit (26, 27) becomes greater than a first preset temperature (Tc+DT), greater than the nominal operating charging temperature, and to cause the heating interrupter (34) to close when the measured temperature of the associated unit (26, 27) becomes less than a second preset temperature (Tc-DT), less than the nominal operating charging temperature and greater than 20°C.

17. The battery module as claimed in any one of Claims 14 and 16, **characterised in that** a temperature-measuring unit (26, 27) is provided in at least two different zones (Z1, Z2) of the module.

18. The battery module as claimed in any one of the preceding claims, **characterised in that** the cells are made by assemblies of thin films.

19. The battery module as claimed in any one of the preceding claims, **characterised in that** the cells have a nominal operating charging temperature, greater than 80°C.

20. The battery module as claimed in any one of the preceding claims, **characterised in that** the cells are of lithium - metal - polymer type.

21. The battery module as claimed in any one of the preceding claims, **characterised in that** it comprises means for producing of a quantitative charging setpoint and a first access for communication to the outside, able to transmit the quantitative charging setpoint.

22. A battery, **characterised in that** it comprises a plurality of battery modules as claimed in any one of the preceding claims in a battery case, the modules being connected by their use terminals (23, 24) in the case, the battery comprising at least two use terminals (23, 24), accessible outside the case and connected to the modules, and at least two charging terminals (21, 22), accessible outside the case and connected to the modules.

23. The battery as claimed in Claim 22, **characterised in that** the use terminals (23, 24) of the modules are connected successively in series in the case, one of the external use terminals (23, 24) is connected to the use terminal (23) of the lowest voltage of all the modules and the other external use terminal (24) of the battery is connected to the use terminal (24) of the highest voltage of all the modules.

24. The battery as claimed in any one of Claims 22 and 23, **characterised in that** the charging terminals (21, 22) of each module are accessible outside the case.

25. The battery as claimed in any one of Claims 22 and 23, **characterised in that** the modules are connected by their charging terminals (21, 22) in the case, the battery comprising two charging terminals (21, 22), accessible outside the case and connected to the modules.

26. The battery as claimed in Claim 23, **characterised in that** the charging terminals (21, 22) of the modules are connected successively in series in the case, one of the external charging terminals (21, 22) is connected to the charging terminal (21) of the lowest voltage of all the modules and the other external charging terminal (22) of the battery is connected to the charging terminal (22) of the highest voltage of all the modules.

27. The battery as claimed in any one of Claims 22 to 26, **characterised in that** the battery comprises means for producing of a quantitative charging setpoint of the modules and a first access for communication to the outside, able to transmit the quantitative charging setpoint.

28. A method for charging a battery module as claimed in any one of Claims 1 to 21 from an external charger, **characterised in that**
the at least one second external charging terminal (21, 22) is first disconnected relative to the at least one first external use terminal (23, 24) distinct from the at least one second external charging terminal (21, 22),
the charger is connected to the external charging terminals (21, 22) to apply voltage to it,
the heating element (33) is connected to the external charging terminals (21, 22) to heat the cells (10) of the module from the voltage of the charger at least to the nominal operating charging temperature during an initial heating phase, and
after the initial heating phase, the at least one first external use terminal (23, 24) is connected to the at least one second external charging terminal (21, 22) to charge the cells (10) from the voltage of the charger.

29. The method as claimed in Claim 28, **characterised in that** the two charging terminals (21, 22) are second charging terminals, distinct from the use terminals (23, 24), called first use terminals,
before and during the initial heating phase, the two charging terminals (21, 22) are disconnected relative to the use terminals (23, 24), until the cells are heated to their nominal operating charging temperature,
after the initial heating phase, the cells are charged from the voltage of the charger from the second charging terminals (21, 22), by connecting the charging terminals (21, 22) to the use terminals (23, 24).

30. The method as claimed in any one of Claims 28 and 29, **characterised in that** at least one measuring unit (26, 27) provided in at least one zone (Z1, Z2) of the module measures the temperature,
a calculator (28) of the module, connected to the measuring unit (26, 27), monitors the measured temperature of the cells and cause the connection of the at least one first external use terminal (23, 24) to the at least one second external charging terminal (21, 22) when the minimal measured temperature is greater than or equal to the nominal operating charging temperature.

31. The method as claimed in any one of Claims 28 to 30, **characterised in that** at least one heating interrupter (34), comprising an opening and closing control input (61), is in series with the heating element (33), this series circuit being connected between the two external charging terminals (21, 22),
the heating interrupter (34) is automatically closed in the presence of the voltage of the charger on the external charging terminals (21, 22) during the initial heating phase,
a calculator of the module controls the control input to at least temporarily cause opening of the heating interrupter only when the charging terminals (21, 22) are connected to the use terminals (23, 24)

32. The method as claimed in Claims 30 and 31 taken as a whole, **characterised in that** the heating element (33) is respectively associated with the temperature-measuring unit (26, 27) in said zone (Z1, Z2) of the module, and
when the charging terminals (21, 22) are connected to the use terminals (23, 24), the calculator controls the control input (61) to cause opening of the heating interrupter (34) when the measured temperature of the associated unit (26, 27) becomes greater than a first preset temperature (Tc+DT), greater than the nominal operating charging temperature, and to cause the closing of the heating interrupter (34) when the measured temperature of the associated unit (26, 27) becomes less than a second preset temperature (Tc-DT), less than the nominal operating charging temperature and greater than 20°C.

33. The method as claimed in any one of Claims 30 and 32, **characterised in that** a temperature-measuring unit (26, 27) is provided in at least two different zones (Z1, Z2) of the module.

34. The method as claimed in any one of Claims 28 to 33, **characterised in that** the battery module is housed in a motor vehicle.

35. A motor vehicle, comprising a traction motor drive and at least one battery as claimed in any one of Claims 22 to 27, for at least temporarily supplying the traction motor drive with electric power.

36. The motor vehicle as claimed in Claim 35, **characterised in that** it further comprises a charging structure having at least one charger (CHG) for charging the battery modules,
the charger (CHG) comprising:
- at least one connection access (CXALEXT) for connection of the charger (CHG) to an external electric feed,
- output terminals (SCH) connected electrically to the charging terminals (21, 22) of the modules,
- charging means (MCH) for electric power charging of the cells from the external electric feed (ALEXT), the charging means (MCH) being connected to the output terminals (SCH).

37. The motor vehicle as claimed in Claim 36, **characterised in that** the charger (CHG) comprises:
- a second communication access (ACCINFCH) for communication with the exterior of the charger, able to receive at least one message (MCH2) containing the quantitative charging setpoint (CONSCH),
- automatic control means (COMCH) connected to the second communication access (ACCINFCH) for imposing on the charging means the quantitative charging setpoint (CONSCH), the charging means (MCH) being provided to charge the cells from the external electric feed (ALEXT) with electric power according to the quantitative charging setpoint (CONSCH) present on the second communication access (ACCINFCH).

38. The motor vehicle as claimed in Claim 37, **characterised in that** the battery comprises production means for producing of a quantitative charging setpoint of the modules and a first communication access for communication to the outside, wherein the first communication access is connected to the second communication access (ACCINFCH) of the charger to transmit thereto the quantitative charging setpoint.

## Patentansprüche

1. Leistungsbatteriemodul, umfassend eine Vielzahl von wiederaufladbaren Zellen (10), die eine nominelle Ladebetriebstemperatur größer als 20°C aufweisen, zwei äußere Anschlüsse (23, 24) zur Nutzung der Zellen und wenigstens ein elektrisches Element zum Heizen der Zellen,
**dadurch gekennzeichnet, dass** es außerdem eine Schaltung (50) zur Ladungsverwaltung der Zellen umfasst, welche umfasst:
- zwei äußere Anschlüsse (21, 22) zum Laden der Zellen, die dazu bestimmt sind, mit einem äußeren Ladegerät verbunden zu werden und von denen wenigstens einer, genannt zweiter Ladeanschluss, von den Nutzanschlüssen (23, 24) verschieden ist,
- erste Unterbrechungs- / Verbindungsmittel zwischen dem wenigstens einen zweiten Anschluss (21, 22) und wenigstens einem der Nutzanschlüsse (23, 24), genannt erster Nutzanschluss (23, 24), wobei die ersten Unterbrechungs- / Verbindungsmittel (53, 54) ausgelegt sind, sich in der einen oder der anderen einer ersten Unterbrechungsposition, um den Stromdurchfluss zwischen dem zweiten Ladeanschluss (21, 22) und dem ersten Nutzanschluss (23, 24) zu verhindern, und einer zweiten Position zum Verbinden des zweiten Ladeanschlusses (21, 22) und des ersten Nutzanschlusses (23, 24) zu befinden,
- Verbindungsmittel (60) zwischen den Ladeanschlüssen (21, 22) und dem Heizelement (33), um wenigstens in der ersten Unterbrechungsposition der ersten Unterbrechungs- / Verbindungsmittel, die Ladeanschlüsse (21, 22) mit dem Heizelement (33) für die Versorgung des Heizelements (33) mit Elektrizität zu verbinden.

2. Batteriemodul gemäß Anspruch 1, **dadurch gekennzeichnet, dass** die beiden Ladeanschlüsse (21, 22) zweite Ladeanschlüsse sind, die von den Nutzanschlüssen (23, 24), genannt erste Anschlüsse, verschieden sind, wobei die ersten Unterbrechungs- / Verbindungsmittel (53, 54) zwischen den zweiten Anschlüssen (21, 22) und den ersten Anschlüssen (23, 24) vorgesehen sind.

3. Batteriemodul gemäß einem der vorhergehenden Ansprüche, **dadurch gekennzeichnet, dass** die zweiten Verbindungsmittel (60) wenigstens einen Heizschalter (34) umfassen, der einen Öffnungs- und Schließungssteuereingang (61) in Reihe mit dem Heizelement (33) aufweist, wobei diese Reihenschaltung eine Verbindung zwischen den Ladeanschlüssen (21, 22) ist,
wobei der Steuereingang (61) mit Öffnungsaktivierungsmitteln (70) verbunden ist, die einen Steuereingang (73, 76) umfassen, um den Heizschalter bei Vorliegen eines Öffnungssteuersignals auf dem Steuereingang (73, 76) in Öffnungsposition zu setzen,
wobei dritte Mittel in dem Modul vorgesehen sind, damit die Schließung des Heizschalters (34) unabhängig von den Öffnungsaktivierungsmitteln (70) und vom Steuereingang (73, 76) ist.

4. Batteriemodul gemäß einem der vorhergehenden Ansprüche, **dadurch gekennzeichnet, dass** die zweiten Verbindungsmittel (60) wenigstens einen Heizschalter (34) umfassen, der einen Öffnungs- und Schließungssteuereingang (61) in Reihe mit dem Heizelement aufweist, wobei diese Reihenschaltung eine Verbindung zwischen den Ladeanschlüssen (21, 22) ist,
wobei der Steuereingang (61) mit dritten Mitteln (37, 38) zur automatischen Schließaktivierung des Heizschalters (34) bei Vorliegen einer Spannung zwischen den Ladeanschlüssen (21, 22) verbunden ist und mit Öffnungsaktivierungsmitteln (70), die einen Steuereingang (73, 76) umfassen, um den Heizschalter in eine Öffnungsposition bei Vorliegen eines Öffnungssteuersignals auf dem Steuereingang (73, 76) zu setzen.

5. Batteriemodul gemäß Anspruch 3 oder 4, **dadurch gekennzeichnet, dass** der Steuereingang (73) der Öffnungsaktivierungsmittel (70) bezüglich des Steuereingangs (61) des Heizschalters (34) optisch isoliert ist.

6. Batteriemodul gemäß Anspruch 3 oder 4, **dadurch gekennzeichnet, dass** die Öffnungsaktivierungsmittel (70) einen Schalter (74) umfassen, dessen Stromunterbrechungs- / Stromleitungshauptweg parallel verbunden ist mit der Reihenschaltung, die vom Heizschalter (34) und dem Unterbrechungsmittel (53) gebildet ist und deren Steueranschluss (76) als Öffnungssteuereingang dient.

7. Batteriemodul gemäß einem der Ansprüche 3 bis 6, **dadurch gekennzeichnet, dass** die dritten Mittel Mittel (37, 38) zur Vorspannung des Steuereingangs (61) aus den Ladeanschlüssen (21, 22) umfassen.

8. Batteriemodul gemäß einem der vorhergehenden Ansprüche, **dadurch gekennzeichnet, dass** die zweiten Verbindungsmittel (60) in Reihe mit dem Heizelement (33) wenigstens einen Heizschalter (34) umfassen, der einen Öffnungsund Schließungssteuereingang (61) aufweist, wobei diese Reihenschaltung eine Verbindung der Ladeanschlüsse (21, 22) ist;
wobei der Steuereingang (61) des Heizschalters (34) mit einem Spannungsbeschränkungsmittel (39) verbunden ist.

9. Batteriemodul gemäß Anspruch 8, **dadurch gekennzeichnet, dass** das Spannungsbeschränkungsmittel (39) wenigstens eine Zenerdiode umfasst.

10. Batteriemodul gemäß einem der Ansprüche 3 bis 9, **dadurch gekennzeichnet, dass** der Heizschalter (34) wenigstens einen Transistor (36) umfasst, dessen Stromunterbrechungs- / Stromleitungshauptweg in Reihe mit dem Heizelement (33) ist und dessen Steueranschluss des Hauptwegs als Steuereingang (61) dient.

11. Batteriemodul gemäß Anspruch 10, **dadurch gekennzeichnet, dass** der Transistor (36) des Heizschalters (34) ein MOS-Transistor ist, dessen Abschnitt Drain - Source den Stromunterbrechungs- /Stromleitungshauptweg bildet und dessen Gate als Steuereingang (61) dient.

12. Batteriemodul gemäß den Ansprüchen 9 und 11 zusammen genommen, **dadurch gekennzeichnet, dass** die Zenerdiode parallel zum Abschnitt Gate - Source des MOS-Transistors (36) des Heizschalters (34) ist.

13. Batteriemodul gemäß einem der vorhergehenden Ansprüche, **dadurch gekennzeichnet, dass** die zweiten Verbindungsmittel (60) in Reihe mit dem Heizelement (33) zwischen den Ladeanschlüssen (21, 22) wenigstens eine thermische Schutzsicherung (35) gegen Temperaturen umfassen, die eine vorgeschriebene Temperatur größer als die nominelle Ladebetriebstemperatur der Zellen überschreitet.

14. Batteriemodul gemäß einem der vorhergehenden Ansprüche, **dadurch gekennzeichnet, dass** es wenigstens eine Einheit (26, 27) zur Messung der Temperatur in wenigstens einem Bereich des Moduls umfasst, und Mittel (28) zur Steuerung der Position der ersten Unterbrechungs- / Verbindungsmittel (53, 54),
wobei die Steuermittel (28) auf die von der Messeinheit (26, 27) gemessene Temperatur empfindlich sind, um die Umstellung der ersten Unterbrechungs- / Verbindungsmittel (53, 54) in die Verbindungsposition zu steuern, wenn die minimale von der Messeinheit (26, 27) gelieferte Temperatur größer oder gleich der nominellen Ladebetriebstemperatur ist, die für die Steuermittel (28) vorgeschrieben ist.

15. Batteriemodul gemäß einem der vorhergehenden Ansprüche, **dadurch gekennzeichnet, dass** die zweiten Verbindungsmittel (60) wenigstens einen Heizschalter (34) umfassen, der einen Öffnungs- und Schließungssteuereingang (61) in Reihe mit dem Heizelement (33) aufweist, wobei diese Reihenschaltung eine Verbindung zwischen den Ladeanschlüssen (21, 22) ist,
wobei das Modul mit dem Steuereingang (61) verbundene Steuermittel (28) umfasst, um den Heizschalter (34) nur in der Verbindungsposition der ersten Unterbrechungs- / Verbindungsmitteln (53, 54) zu öffnen.

16. Batteriemodul gemäß den Ansprüchen 14 und 15 zusammen genommen, **dadurch gekennzeichnet, dass** das Heizelement (33) jeweils zur Temperaturmesseinheit (26, 27) im Bereich des Moduls (Z1, Z2) gehört, und
die Steuermittel (28) vorgesehen sind, um in Verbindungsposition der ersten Unterbrechungs- / Verbindungsmittel (53, 54) die Öffnung des Heizschalters (34) zu veranlassen, wenn die gemessene Temperatur der zugehörigen Einheit (26, 27) größer wird als eine erste vorgeschriebene Temperatur (Tc-DT), die größer als die nominelle Ladebetriebstemperatur ist, und die Schließung des Heizschalters (34) zu veranlassen, wenn die gemessene Temperatur der zugehörigen Einheit (26, 27) kleiner wird als eine zweite vorgeschriebene Temperatur (Tc-DT), die kleiner als die nominelle Ladebetriebstemperatur und größer als 20°C ist.

17. Batteriemodul gemäß einem der Ansprüche 14 und 16, **dadurch gekennzeichnet, dass** eine Temperaturmesseinheit (26, 27) in wenigstens zwei verschiedenen Bereichen (Z1, Z2) des Moduls vorgesehen ist.

18. Batteriemodul gemäß einem der vorhergehenden Ansprüche, **dadurch gekennzeichnet, dass** die Zellen durch Dünnfilmanordnungen hergestellt ist.

19. Batteriemodul gemäß einem der vorhergehenden Ansprüche, **dadurch gekennzeichnet, dass** die Zellen eine nominelle Ladebetriebstemperatur größer als 80°C haben.

20. Batteriemodul gemäß einem der vorhergehenden Ansprüche, **dadurch gekennzeichnet, dass** die Zellen vom Typ Lithium-Metall-Polymer sind.

21. Batteriemodul gemäß einem der vorhergehenden Ansprüche, **dadurch gekennzeichnet, dass** es ein Mittel zur Herstellung eines quantitativen Ladesollwerts umfasst und einen ersten Verbindungszugang nach außen, der ausgelegt ist, den quantitativen Ladesollwert zu übertragen.

22. Batterie, **dadurch gekennzeichnet, dass** sie in einem Batteriegehäuse eine Vielzahl von Batteriemodulen gemäß einem der vorhergehenden Ansprüche umfasst, wobei die Module an ihren Nutzanschlüssen (23, 24) im Gehäuse verbunden sind, wobei die Batterie wenigstens zwei Nutzanschlüsse (23, 24) umfasst, die am Äußeren des Gehäuses zugänglich sind und mit den Modulen verbunden sind, und wenigstens zwei Ladeanschlüsse (21, 22), die am Äußeren des Gehäuses zugänglich sind und mit den Modulen verbunden sind.

23. Batterie gemäß Anspruch 22, **dadurch gekennzeichnet, dass** die Nutzanschlüsse (23, 24) der Module nacheinander in Reihe in dem Gehäuse verbunden sind, wobei einer der äußeren Anschlüsse (23, 24) mit dem Nutzanschluss (23) der geringsten Spannung der Gesamtheit der Module und der andere äußere Anschluss (24) der Batterie mit dem Nutzanschluss (24) der höchsten Spannung der Gesamtheit der Module verbunden ist.

24. Batterie gemäß einem der Ansprüche 22 und 23, **dadurch gekennzeichnet, dass** die Ladeanschlüsse (21, 22) jedes Moduls am Äußeren des Gehäuses zugänglich sind.

25. Batterie gemäß einem der Ansprüche 22 und 23, **dadurch gekennzeichnet, dass** die Module an ihren Ladeanschlüsse (21, 22) im Gehäuse befestigt sind, wobei die Batterie zwei Ladeanschlüsse (21, 22) umfasst, die am Äußeren des Gehäuses zugänglich sind und mit den Modulen verbunden sind.

26. Batterie gemäß Anspruch 23, **dadurch gekennzeichnet, dass** die Ladeanschlüsse (21, 22) der Module hintereinander in Reihe im Gehäuse verbunden sind, wobei einer der äußeren Ladeanschlüsse (21, 22) mit dem Ladeanschluss der geringsten Spannung (21) der Module verbunden ist und der andere äußere Ladeanschluss (22) der Batterie mit dem Ladeanschluss (22) der höchsten Spannung der Gesamtheit der Module verbunden ist.

27. Batterie gemäß einem der Ansprüche 22 bis 26, **dadurch gekennzeichnet, dass** die Batterie ein Mittel zur Herstellung eines quantitativen Ladesollwerts der Module und einen ersten Kommunikationszugang nach außen umfasst, der ausgelegt ist, den quantitativen Ladesollwert zu übertragen.

28. Verfahren zum Laden eines Batteriemoduls gemäß einem der Ansprüche 1 bis 21 von einem äußeren Ladegerät, **dadurch gekennzeichnet, dass**
der wenigstens eine zweite äußere Ladeanschluss (21, 22) zuerst bezüglich des wenigstens einen ersten äußeren Nutzanschlusses (23, 24) getrennt wird, der von dem wenigstens einen zweiten äußeren Nutzanschluss (21, 22) verschieden ist,
wobei das Ladegerät mit den äußeren Ladeanschlüssen (21, 22) verbunden wird, um an ihnen eine Spannung anzulegen,
das Heizelement (33) mit den äußeren Ladeanschlüssen (21, 22) verbunden wird, um die Zellen (10) des Moduls aus der Spannung des Ladegeräts wenigstens bei der nominellen Ladebetriebstemperatur während einer anfänglichen Heizphase zu erhitzen, und
nach der anfänglichen Heizphase, der wenigstens eine äußere Nutzanschluss (23, 24) mit dem wenigstens einen zweiten äußeren Ladeanschluss (21, 22) verbunden wird, um die Zellen (10) aus der Spannung des Ladegeräts zu laden.

29. Verfahren gemäß Anspruch 28, **dadurch gekennzeichnet, dass** die zwei Ladeanschlüsse (21, 22) zweite Ladeanschlüsse sind, die von den Nutzanschlüssen (23, 24), genannt erste Nutzanschlüsse, verschieden sind
vor und während der anfänglichen Heizphase die beiden Ladeanschlüsse (21, 22) bezüglich der Nutzanschlüsse (23, 24) getrennt werden, bis die Zellen auf ihre nominelle Ladebetriebstemperatur erhitzt sind,
nach der anfänglichen Heizphase die Zellen aus der Spannung des Ladegeräts seitens der zweiten Ladeanschlüsse (21, 22) durch Verbindung der Ladeanschlüsse (21, 22) mit den Nutzanschlüssen (23, 24) der Zellen geladen werden.

30. Verfahren gemäß einem der Ansprüche 28 und 29, **dadurch gekennzeichnet, dass** wenigstens eine Messeinheit (26, 27), die in wenigstens einem Bereich (Z1, Z2) des Moduls vorgesehen ist, die Temperatur misst,
ein Rechner (28) des Moduls, der mit der Messeinheit (26, 27) verbunden ist, die gemessene Temperatur der Zellen überwacht und die Verbindung des wenigstens einen ersten äußeren Anschlusses (23, 24) mit dem wenigstens einen zweiten äußeren Ladeanschluss (21, 22) steuert, wenn die minimale gemessene Temperatur größer oder gleich der nominellen Ladebetriebstemperatur ist.

31. Verfahren gemäß einem der Ansprüche 28 bis 30, **dadurch gekennzeichnet, dass** wenigstens ein Heizschalter (34), umfassend einen Öffnungs- und Schließungssteuereingang (61) in Reihe mit dem Heizelement (33) ist, wobei die Reihenschaltung eine Verbindung zwischen den beiden äußeren Ladeanschlüssen (21, 22) ist,
der Heizschalter (34) automatisch geschlossen wird bei Vorliegen der Spannung des Ladegeräts an den äußeren Ladeanschlüssen (21, 22) während der anfänglichen Heizphase,
ein Rechner des Moduls nur den Steuereingang steuert, um wenigstens zeitweise die Öffnung des Heizschalters zu veranlassen, wenn die Ladeanschlüsse (21, 22) mit den Anschlüssen (23, 24) der Zellen verbunden sind.

32. Verfahren gemäß den Ansprüchen 30 und 31 zusammengenommen, **dadurch gekennzeichnet, dass** das Heizelement (33) jeweils zur Temperaturmesseinheit (26, 27) im Bereich (Z1, Z2) des Moduls gehört, und
wenn die Ladeanschlüsse (21, 22) mit den Nutzanschlüssen (23, 24) der Zellen verbunden sind, der Rechner den Steuereingang (61) steuert, um die Öffnung des Heizschalters (34) zu veranlassen, wenn die gemessene Temperatur der zugehörigen Einheit (26, 27) größer als eine erste vorgeschriebene Temperatur (Tc+DT) wird, die größer als die nominelle Ladebetriebstemperatur ist, und um die Schließung des Heizschalters (34) zu veranlassen, wenn die gemessene Temperatur der zugehörigen Einheit (26, 27) kleiner als eine zweite vorgeschriebene Temperatur (Tc-DT) wird, die kleiner als die nominelle Ladebetriebstemperatur und größer als 20°C ist.

33. Verfahren gemäß einem der Ansprüche 30 und 32, **dadurch gekennzeichnet, dass** eine Temperaturmesseinheit (26, 27) in wenigstens zwei verschiedenen Bereichen (Z1, Z2) des Moduls vorgesehen ist.

34. Verfahren gemäß einem der Ansprüche 28 bis 33, **dadurch gekennzeichnet, dass** das Batteriemodul in einem Kraftfahrzeug untergebracht ist.

35. Kraftfahrzeug, umfassend eine Traktionskette und wenigstens eine Batterie gemäß einem der Ansprüche 22 bis 27, um wenigstens zeitweise die Traktionskette mit elektrischer Energie zu versorgen.

36. Kraftfahrzeug gemäß Anspruch 35, **dadurch gekennzeichnet, dass** es außerdem eine Ladestruktur umfasst, die wenigstens ein Ladegerät (CHG) zum Laden der Batteriemodule aufweist,
wobei das Ladegerät (CHG) umfasst:
- wenigstens einen Zugang (CXALEXT) zur Verbindung des Ladegeräts (CHG) mit einer äußeren elektrischen Versorgung,
- Ausgangsanschlüsse (SCH), die elektrisch mit den Ladeanschlüssen (21, 22) der Module verbunden sind,
- ein Mittel (MCH) zum Laden der Zellen mit elektrischer Energie aus der äußeren elektrischen Versorgung (ALEXT), wobei das Lademittel (MCH) mit den Ausgangsanschlüssen (SCH) verbunden ist.

37. Kraftfahrzeug gemäß Anspruch 36, **dadurch gekennzeichnet, dass** das Ladegerät (CHG) umfasst:
- einen zweiten Zugang (ACCINFCH) zur Kommunikation mit dem Äußeren des Ladegeräts, der ausgelegt ist, wenigstens eine Nachricht (MCH2) zu empfangen, die den quantitativen Ladesollwert (CONSCH) enthält,
- automatische Steuermittel (COMCH), die mit dem zweiten Kommunikationszugang (ACCINFCH) verbunden sind, um dem Lademittel den quantitativen Ladesollwert (CONSCH) aufzuerlegen, wobei das Lademittel (MCH) vorgesehen ist, um die Zellen mit elektrischer Energie aus der äußeren elektrischen Versorgung (ALEXT) gemäß dem quantitativen Ladesollwert (CONSCH) zu laden, der auf dem zweiten Kommunikationszugang (ACCINFCH) vorliegt.

38. Automobilfahrzeug gemäß Anspruch 37, **dadurch gekennzeichnet, dass** die Batterie ein Mittel zur Herstellung eines quantitativen Ladesollwerts der Module umfasst sowie einen ersten Kommunikationszugang nach außen, der mit dem zweiten Kommunikationszugang (ACCINFCH) des Ladegeräts verbunden ist, um ihm den quantitativen Ladesollwert zu übertragen.
